(19)

Europäisches
Patentamt
European
Patent Office
Office européen
des brevets

(11) **EP 3 443 945 A1**

(12) **EUROPEAN PATENT APPLICATION**

(43) Date of publication:
**20.02.2019 Bulletin 2019/08**

(51) Int Cl.:
**A61H 3/04** (2006.01)

(21) Application number: **18188430.5**

(22) Date of filing: **10.08.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.08.2017   JP 2017156653**

(71) Applicant: **Nabtesco Corporation
Tokyo (JP)**

(72) Inventor: **HASHIMOTO, Hiroaki
Kobe-shi, Hyogo (JP)**

(74) Representative: **Grünecker Patent- und
Rechtsanwälte
PartG mbB
Leopoldstraße 4
80802 München (DE)**

(54) **ELECTRIC VEHICLE, METHOD OF CONTROLLING ELECTRIC VEHICLE, AND COMPUTER
PROGRAM**

(57)    An electrically assisted walking vehicle (10), an example of an electric vehicle, includes a control unit that causes a driving force to be generated, and thereafter reduces the driving force when an attitude of the electric vehicle (10) is about to become unstable or has become unstable.

Fig. 1

EP 3 443 945 A1

**Description**

**TECHNICAL FIELD**

The present invention relates to an electric vehicle for assisting elderly people, disabled people, patients and others with a gait impairment in walking. The invention also relates to a method of controlling the electric vehicle, a computer program, and an electric wheeled walker.

**BACKGROUND**

There have been used walking aids including a wheeled walker (a rollator, a rolling walker) that assists the elderly's outing, and a walker that assists disabled people or patients in walking. For instance, Patent Literature 1 (Japanese Patent Application Publication 2009-183407) disclosed a walking aid device which a user can easily maneuver to travel straight or turn.

The walking aid device (the electric vehicle) disclosed in Patent Literature 1 includes a frame body having a handle portion to be held by a user, more than one wheel provided on the right and left sides of the frame body, more than one driving motor that drives each wheel rotatably, and a controller that detects a back electromotive force generated at the driving motor and then controls the driving motor based on the detected back electromotive force.

When a front wheel of such a conventional walking aid device collides with a step, if the level of the step is lower relative to the front wheel, it is possible to cause the front wheels to ride on the step by a driving force of the driving motor at the time of normal traveling where the walking aid device travels on a flat ground together with a force of the user who pushes the walking aid device forward (these forces are hereinafter referred to as a "normal traveling force" collectively). Whereas if the level of the step is high relative to the front wheel, it is difficult to cause the front wheels to ride on the step only by the normal traveling force. In this case, for example, a user is required to apply a force downward, which is a different direction from the direction in which the user applies a force to move the walking aid device forward, to the handle of the walking aid device to lift and make the front wheels run on the step. However, this operation causes a large load to users with a gait impairment. To solve this problem, the front wheels may be lifted up by utilizing a driving force of the drive motor. In this case, as compared with the case where the front wheels are lifted only by the user's own power, when the force generated by the drive motor and the user's intention do not match, it may become difficult to control an attitude of the walking assistance device in which the front wheels are ascending.

**SUMMARY**

An object of the invention is to provide an electric vehicle whose front wheels can ride on a step without causing an user to perform an operation which may be a heavy burden for the user and in which it is prevented that an attitude of the electric vehicle becomes unstable and the instability is increased when getting over the step. Also provided are a control method of such an electric vehicle, a computer program, and an electric wheeled walker.

An electric vehicle according to one aspect of the invention includes a drive unit generating a driving force for raising front wheels of the electric vehicle, an attitude detection unit for detecting an attitude of the electric vehicle; and a control unit, after causing the drive unit to generate a driving force, reducing the driving force of the driving unit when it is determined that the attitude of the electric vehicle is about to become unstable or has become unstable based on an attitude of the electric vehicle detected by the attitude detection unit.

In this case, when an inclination angle of the electric vehicle reaches to or exceeds a predetermined angle, it may be determined that the attitude is about to become unstable or becomes unstable.

Alternatively, when the front wheel is raised by a predetermined value or more, it may be determined that the attitude is about to become unstable or becomes unstable.

Alternatively, when at least one of the front wheel or rear wheel of the electric vehicle idly rotates, it may be determined that the attitude is about to become unstable or becomes unstable.

Alternatively, when a tilt angle of the electric vehicle reaches to or exceeds a predetermined angle, it may be determined that the attitude is about to become unstable or becomes unstable.

Alternatively, when the rear wheel of the electric vehicle reaches to or exceeds a predetermined number of rotations, it may be determined that the attitude is about to become unstable or becomes unstable.

When at least any one of the number of rotations, an angular velocity, an angular acceleration, and a speed of the electric vehicle or a rear wheel of the electric vehicle in a direction where the electric vehicle is moved forward reaches to or exceeds a predetermined value, it may be determined that the attitude is about to become unstable or becomes unstable.

When a current or voltage for generating the driving force is equal to or below a predetermined value, or when a change amount per unit time of the current or the voltage is equal to or more than a predetermined value, it may be

2

determined that the attitude is about to become unstable or becomes unstable.

When a torque for generating the driving force is equal to or blow a predetermined value or when the amount of change in the torque is equal to or more than a predetermined value, it may be determined that the attitude is about to become unstable or becomes unstable.

When a difference of the angular acceleration between the left front wheel and the right front wheel reaches to or exceeds a predetermined value or when a difference of the angular acceleration between a left rear wheel and a right rear wheel of the electric vehicle, it may be determined that the attitude is about to become unstable or becomes unstable.

When a speed or acceleration in a backward direction of the electric vehicle, the front wheel, or a rear wheel of the electric vehicle reaches to or exceeds a predetermined value, it may be determined that the attitude is about to become unstable or becomes unstable.

When a force pushing the electric vehicle backward is applied to handles that a user of the electric vehicle touches, it may be determined that the attitude is about to become unstable or becomes unstable.

The control unit may increase or decrease a reduction rate of the driving force of the drive unit in accordance with at least one of the number of rotations, an angular velocity, an angular acceleration, and a speed of the electric vehicle or a rear wheel of the electric vehicle at the time when it is determined that the front wheel is raised by a predetermined value or more based on an attitude of the electric vehicle detected by the attitude detection unit or when it is determined that an inclination angle of the electric vehicle reaches to or exceeds a predetermined angle.

The control unit may increase the reduction rate as the speed or acceleration of the electric vehicle or the number of rotations, the angular velocity, or the angular acceleration of the rear wheel is larger, or the control unit reduces the driving force to zero based on at least one of the speed or acceleration of the electric vehicle or at least one of the number of rotations, the angular velocity, or the angular acceleration of the rear wheel.

The control unit may increase a reduction rate of the driving force or reduces the driving force to zero according to an inclination angle of the electric vehicle when it is determined that the front wheel is raised by a predetermined value or more based on the attitude of the electric vehicle detected by the attitude detection unit.

It may be determined that the front wheel is raised by a predetermined value or more, that at least one of the front wheel and a rear wheel of the electric vehicle idly rotates, or that the attitude is about to become unstable or becomes unstable while a user tries to cancel a state where the driving force is generated.

The control unit may use a different reduction rate of the driving force between when it is detected that the front wheel is raised by a predetermined value or more based on the attitude of the electric vehicle (10) detected by the attitude detection unit, when it is detected that at least one of the front wheel or the rear wheel idly rotates, and when it is detected that the user tries to cancel the state where the driving force is generated.

A method of controlling an electric vehicle includes: a step of generating a driving force for raising a front wheel of the electric vehicle; a step of determining an attitude of the electric vehicle after generating the driving force; and a step of reducing the driving force when it is determined that an attitude of the electric vehicle is about to become unstable or becomes unstable.

A computer program according to another aspect of the invention causes a computer to perform: a step of generating a driving force for raising a front wheel of the electric vehicle; a step of determining an attitude of the electric vehicle after generating the driving force; and a step of reducing the driving force when it is determined that an attitude of the electric vehicle is about to become unstable or becomes unstable.

The electrically assisted walking vehicle according to the invention is characterized in that a driving force for raising a front wheel of the electrically assisted walking vehicle is generated and thereafter the driving force is reduced when an attitude of the electrically assisted walking vehicle is about to become unstable or has become unstable.

According to the invention, it is possible to lift the front wheels to ride over the step without user's performing an operation that may be a heavy burden to the user, and it is possible to prevent that the attitude of the electric vehicle becomes unstable at the time when it runs onto the step.

**BRIEF DESCRIPTION OF THE DRAWINGS**

Fig. 1 is a perspective view of a power-assisted rollator according to a first embodiment of the invention.
Fig. 2 is a side view of the power-assisted rollator according to the first embodiment of the invention.
Fig. 3 schematically shows a leg detection sensor.
Fig. 4 schematically shows a grip sensor.
Fig. 5 schematically shows a variation of the grip sensor.
Fig. 6 is a flowchart of one example of the operation of the control unit.
Fig. 7 is a graph showing the change in driving force over time after a front wheel strikes a step.

Fig. 8 is a perspective view of a power-assisted rollator according to a second embodiment of the invention.

Fig. 9 is a side view of the power-assisted rollator according to the second embodiment of the invention.

Fig. 10 is a side view of a rear wheel of the power-assisted rollator according to the second embodiment of the invention.

Fig. 11 is a sectional view of a rear wheel of the power-assisted rollator according to the second embodiment of the present invention (a sectional view along the XI-XI line in Fig. 10).

Fig. 12 is a perspective sectional view of a rear wheel of the power-assisted rollator according to the second embodiment of the present invention.

Fig. 13 schematically shows a variation of the power-assisted rollator (in normal traveling).

Fig. 14 schematically shows a variation of the power-assisted rollator (the front wheels are locked).

Fig. 15a is a schematic view of the power-assisted rollator according to a third embodiment of the invention.

Fig. 15b is a schematic view of the power-assisted rollator according to the third embodiment of the invention.

Fig. 16a is a schematic view of the power-assisted rollator according to a modification example of the third embodiment.

Fig. 16b is a schematic view of the power-assisted rollator according to the modification example of the third embodiment.

Fig. 17 is a perspective view of a power-assisted rollator according to a fourth embodiment of the invention.

Fig. 18 is a flowchart for describing an operation of a control unit in the power-assisted rollator according to a fifth embodiment of the invention.

## DESCRIPTION OF THE PREFERRED EMBODIMENTS

First Embodiment

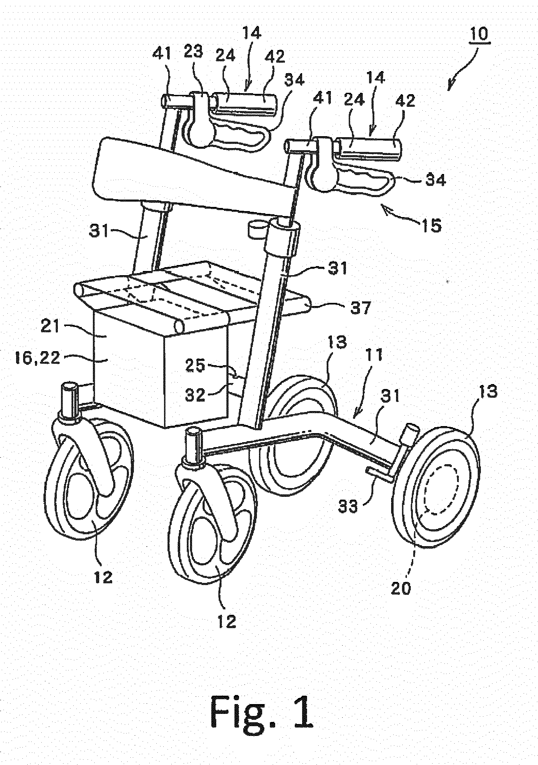

The first embodiment of the present invention will now be described with reference to Figs. 1 to 7. In the following description, like elements may be numbered and labeled similarly. Functions of the like elements are also same so that descriptions of such elements will be hereunder omitted.

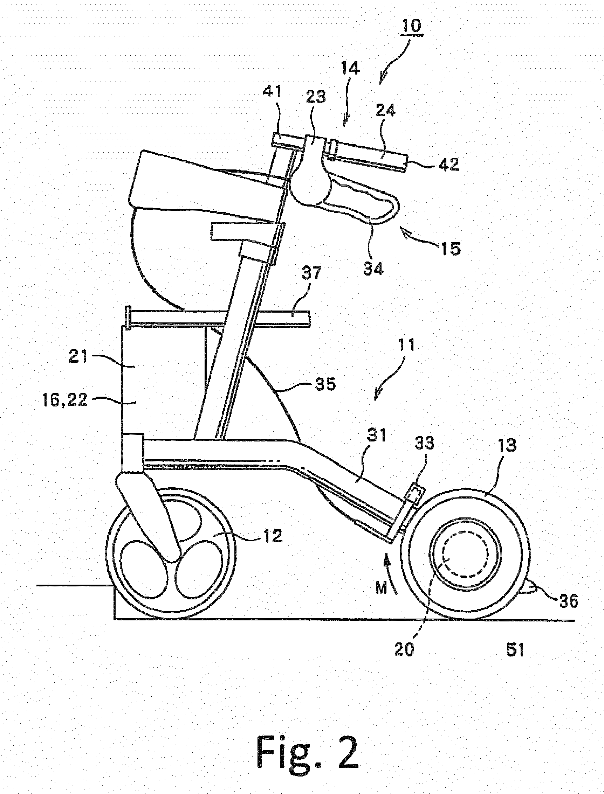

Figs. 1 and 2 are views showing an electric rollator (hereinafter referred to as a power-assisted rollator (an electric wheeled walker)) as one example of an electric vehicle. Fig. 1 is a schematic perspective exterior view of a power-assisted rollator 10 according to a first embodiment, and Fig. 2 is a side view of the power-assisted rollator 10 of Fig. 1.

Configuration of Power-Assisted Rollator

Referring to Figs. 1 and 2, the power-assisted rollator 10 includes a frame 11, a pair of front wheels 12 and a pair of rear wheels 13 provided on the frame 11, and a pair of handles (operation units) 14 connected to the frame 11. A brake unit 15 is further provided at each handle 14 to manually put a brake on the power-assisted rollator 10. In the following description, the pair of front wheels 12 and the pair of rear wheels 13 may be collectively or individually referred to as a wheel(s).

The pair of rear wheels 13 each have a motor 20 coupled thereto for assisting rotation of the corresponding rear wheel 13. A battery 21 and a control unit 16 are mounted to the frame 11. The control unit 16 includes a speed sensor 22. Further, on each of the handles 14, an inclination sensor 23 and a grip sensor (an operation force sensor) 24 are provided. A leg detection sensor 25 for detecting a leg of a user is provided at a position on the frame 11 and below the pair of handles 14.

The control unit 16 is an electronic substrate including a CPU (Central Processing Unit) or the like. In the embodiment, the control unit 16 is a CPU. A nonvolatile memory unit (not shown) stores a program for causing the control unit 16 to operate and information necessary for the operation of the control unit 16. A volatile memory unit (not shown) stores information generated by the control unit 16 and other information and the like received from other elements. The program performs controls as described in detail below, control for increasing a driving force of the motor 20 (a process of shifting to a step mode), control for escaping from the step mode, and the like. The nonvolatile memory unit may be any memory such as a flash memory (a NAND memory and the like), MRAM, or FRAM. The control unit 16 may be a device such as an application specific integrated circuit (ASIC) or a field programmable gate array (FPGA).

Next, components of the power-assisted rollator 10 will be further described.

The frame 11 includes a pair of right and left pipe frames 31 and a connecting frame 32 that connects the pair of pipe frames 31 in the lateral direction.

On front ends of the left and right pipe frames 31, there are provided the pair of front wheels 12, respectively. The pair of front wheels 12 are provided such that the power-assisted rollator 10 is able to move forward, backward, and turn. In the following description, forward and backward directions in which the rollator moves are also collectively referred to as a front-rear direction.

Furthermore, on rear ends of the left-right pipe frames 31, there are provided the pair of rear wheels 13, respectively. The rear wheels 13 are provided respectively such that the power-assisted rollator 10 is able to move forward, backward, and turn.

On the periphery of the rear wheels 13, there may be provided brake shoes 33 capable of mechanical contact. The brake shoes 33 are coupled to brake levers 34 of the hand brakes 15 with wires respectively. Therefore, when the user manually operates the brake levers 34, the brake shoes 33 contact the corresponding rear wheels 13 to brake the rear wheels 13. The mechanical brakes are not limited to above configuration, but any mechanical brakes can be used.

On upper ends of the pair of pipe frames 31, a pair of handles 14 are provided. The pair of handles 14 are designed to be gripped by hands of a user. The pair of handles 14 each include a pole 41. The pole 41 is provided with a grip 42. A brake lever 34 is provided on each of the poles 34. The configuration of the handle 14 is not limited to the above described one. For example, a bar handle extending in the horizontal direction may be provided so as to connect the pair of right and left pipe frames 31, and the grip portions 42 may be provided as the pair of left and right handles 14 on the bar handle.

In the embodiment, the motors 20 may be any motors such as servomotors, stepper motors, AC motors, and DC brushless motors. Moreover, a reducer can be integrated with the motors. The motor 20 drives the rear wheel 13 to move it forward when the rollator travels. In the embodiment, the motors 20 may also serve as drive units for lifting the front wheels 12 up (ascending the front wheels 12 relative to the rear wheels 13). The motors 20 produce a driving force for applying a moment to the power-assisted rollator 10 in such a direction as to lift the front wheels 12.

Moreover, the motors 20 may also have power-generating brakes to serve as the brake unit for braking the rear wheels 13. In this case, when the motors 20 brake the rear wheels 13, the motors 20 serve as power generators while braking the rear wheels 13 with resistance forces thereof. Instead of the power-generating brakes, the motors may have reverse brakes. Alternatively, it may also be possible that the brake units for braking the rear wheels 13 such as electromagnetic brakes or mechanical brakes are provided separately from the motors 20.

The left and right motors 20 may be controlled collectively as the left and right motors operate together by the control unit 16. Alternatively, the left and right motors 20 may be controlled independently of each other as will be described later.

In the embodiment, the motors 20 are each connected to the corresponding rear wheels 13. Alternatively it may also be possible that the motor 20 is connected to all of the pair of front wheels 12 and the pair of rear wheels 13.

The control unit 16 controls the entirety of the power-assisted rollator 10 including the motors 20 and so on. A detail of how control is performed by the control unit 16 will be described later.

The speed sensor 22 senses the number of rotations or a speed of rotation of the rear wheels 13 and transmits a signal representing the number of rotations or the speed to the control unit 16. The speed sensor 22 may be built in the pair of rear wheels 13 or the pair of front wheels 12 of the power-assisted rollator 10, or may be provided in all of the pair of front wheels 12 and the pair of rear wheels 13 respectively. In the embodiment, the rotation speed and angular velocity of the rear wheel 13 are obtained by the speed sensor 22 and calculation performed by the control unit 16 based on the obtained data. In the embodiment, a speed of the rear wheels 13 means a speed of the rear wheels 13 relative to the road surface in the front-rear direction. A speed of the power-assisted rollator 10 can also be calculated by performing addition of the respective speeds of the pair of rear wheels 13 in a vector space.

In a case where the motors 20 are brushless motors, it may also be possible that a Hall element provided in each of the motors 20 is used as the speed sensor 22 to calculate the number of rotations, the angular velocity and the speed of the wheels or the speed of the power-assisted rollator 10.

In a case where it is possible to detect the angular velocity of the motor 20 based on a back electromotive force of the motor 20, it is possible to calculate, from the amount of the back electromotive force, the number of rotations, the angular velocity, and the speed of the wheels and the speed of the power-assisted rollator 10.

The speed sensor 22 may be installed in any of the components such as the frame 11 and the pair of handles 14, instead of installing in the pair of the front wheels 12 and/or the pair of the rear wheels 13. When the speed sensor is an acceleration detection sensor, the speed may be calculated by time-integrating the detected acceleration components. When the speed sensor 22 includes a global positioning system (GPS), the speed may be calculated by time-differentiating detected location information.

The inclination sensor 23 may sense inclination of the power-assisted rollator 10. For example, the inclination sensor 23 senses an inclination angle of the power-assisted rollator 10 to determine whether the power-assisted rollator 10 is on a flat surface or on an inclined surface, and may send, to the control unit 16, a signal representing the inclination of the power-assisted rollator 10. It should be noted that the inclination angle is an angle with respect to a vertical direction which is a gravity direction perpendicular to a straight line connecting the center axis of the front wheels 12 and the center axis of the rear wheels 13. The inclination sensor 23 is provided in an upper portion of the power-assisted rollator 10. Alternatively the inclination sensor 23 may be provided in the lower portion of the power-assisted rollator 10. However, if the inclination sensor 23 is provided in the upper portion, it may be possible to sense the attitude of the power-assisted rollator 10 more accurately as compared to the case where the inclination sensor 23 is provided in the lower portion. This is because the wheels that are the rotation center of the attitude of the power-assisted rollator 10 are disposed in the lower portion of the power-assisted rollator 10. A gyro sensor or acceleration sensor may be used as the inclination sensor 23. The inclination sensor 23 is an example of an attitude detection unit.

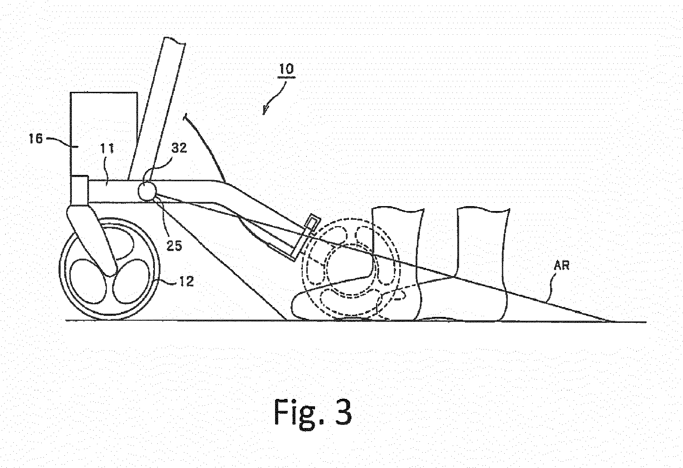

Fig. 3 is a schematic view of an example of the leg detection sensor 25. Referring to Fig. 3, the leg detection sensor 25 may be mounted on the coupling frame 32. The leg detection sensor 25 may be an image sensor, an infrared sensor, or the like. The leg detection sensor 25 can detect behavior of a user's leg by measuring a distance from a foot of the user of the power-assisted rollator 10.

More specifically, the leg detection sensor 25 shown in Fig. 3 may determine whether the user's leg in the area AR is moving or stays still, or whether it is moving away or closer, or whether or not it is turned around since the user is about to sit on a seat 37.

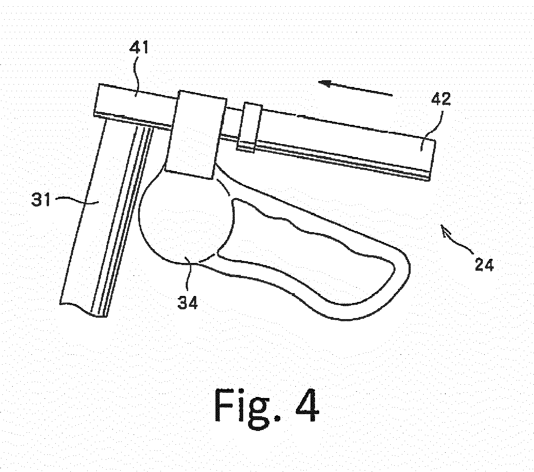

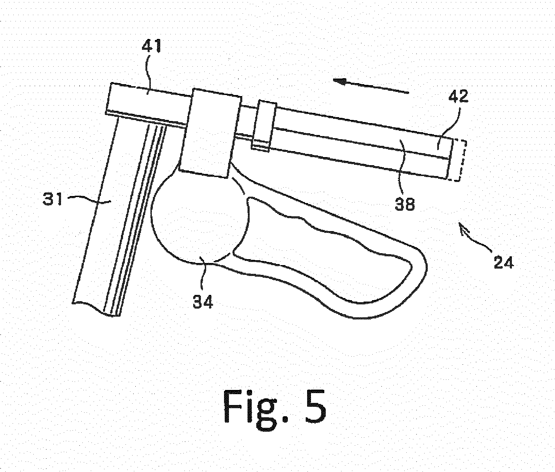

Figs. 4 and 5 are schematic views of the grip sensor 24.

On each of the grips 42 of the pair of handles 14, there may be provided the grip sensor 24 for sensing the operation force (the grip force) of the user to manually push or pull the power-assisted rollator 10. Displacement of the grip sensors 24 in the pushing and/or pulling direction with respect to the poles 41 may be restricted by an elastic member such as a spring (not shown). The grip sensor 24 may further include a potentiometer to detect the displacement.

As mentioned above, the grips 42 may be movable in the front-rear direction with respect to the poles 41. When the grips are moved in the direction of the arrows in Figs. 4 and 5 (the front direction), it may be determined that the power-assisted rollator 10 is pushed by the user. When the grips are moved in the direction opposite to the direction of the arrows in Figs. 4 and 5 (the rear direction), it may be determined that the power-assisted rollator 10 is pulled by the user. When the grips are not moved, it may be determined that the rollator is neither pushed nor pulled.

In this manner, it may be possible to determine whether the user is trying to move the power-assisted rollator 10 forward or backward, or whether the user does not have the intention to change the state of the power-assisted rollator 10.

Each of the left and right handles 14 may have a separate grip sensor 24. The grip sensors 24 may sense an operation force (a grip force) applied to the handles 14 independently from each other and send a signal of the sensed operation force to the control unit 16. Thus, it can be recognized whether the user grips only one of the pair of handles 14 (the one-hand gripping state), grips none of the pair of handles 14 (the non-hand gripping state), or grips both the pair of the handles 14 (the two-hand gripping state).

Referring again to Fig. 5, strain sensors 38 (for example, strain gauges) may be provided on the grips 42 to sense the moments applied to the grips 42 or the pair of pipe frames 31, and the strain sensors 38 may serve as the grip sensors 24. In this case, the grips 42 are fixed on the poles 41 so that the structure becomes simple. Alternatively, a joy stick, a push button, or a proximity sensor for sensing a hand of the user may be provided on the grips 42 and these may be used as the grip sensors 24. That is, "the determination whether the user is trying to move the electric vehicle forward via the operation unit" may be achieved by sensing the operation force of the user applied to the operation unit when the user pushes or pulls the operation unit by hand or other part of his/her body, or by sensing the intention of the user by means of a switch means such as a joystick or a push button.

Operation in the Embodiment

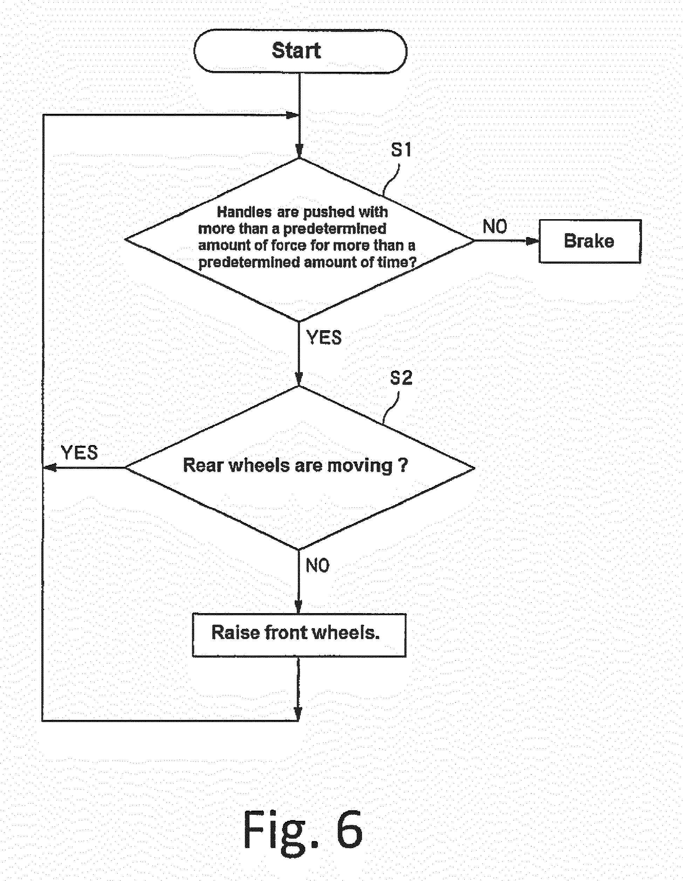

Operation in the embodiment configured as above will be hereinafter described. Fig. 6 is a flowchart of one example of the operation of the control unit 16.

The control unit 16 determines whether the front wheel(s) 12 has struck a step while the user is trying to move the power-assisted rollator 10 forward. More specifically, the control unit 16 determines whether the left and right handles 14 are pushed with more than a predetermined amount of force for more than a predetermined amount of time (e.g., one second or more), based on the signals from the grip sensors 24 provided on both the left and right handles 14 (step S1).

It may also be possible that the control unit 16 uses the rate of change of the operation force (the absolute value) in addition to the value of the operation force (the absolute value) so as to determine whether the handles 14 are pushed by the hands of the user with more than a predetermined amount of force. This may enable more accurately determining whether the handles 14 are pushed by the hands of the user with more than a predetermined amount of force. For example, when the absolute value of the operation force is equal to or less than a predetermined value and the absolute value of the rate of change of the operation force (the differentiation value of the operation force) is equal to or less than a predetermined value, the control unit 16 may determine that the handles 14 are not pushed by the hands of the user with more than a predetermined amount of force, and otherwise, the control unit 16 may determine that the handles 14 are pushed by the hands of the user with more than a predetermined amount of force. Further, when the operation force and the rate of change of the operation force reside within an oval region internally touching a rectangular numerical region defined by the predetermined values, the control unit 16 may determine that the handles 14 are not gripped by the user. In this case, more accurate determination can be made.

When the pair of handles 14 are not pushed with more than a predetermined amount of force ("NO" in step S1), the control unit 16 determines that the user is not trying to move the power-assisted rollator 10 forward and may not proceed to the following control operation. In this case, the control unit 16 may use the motors 20 as dynamic brakes and thereby brake the rear wheels 13.

On the other hand, when the pair of handles 14 are pushed with more than a predetermined amount of force for more than a predetermined amount of time ("YES" in step S1), the control unit 16 may determine that the user is trying to move the power-assisted rollator 10 forward. Then, the control unit 16 may determine whether the front wheel(s) 12 has struck a step (step S2).

The speed sensor 22 senses the number of rotations or an angular velocity of the rear wheels 13 and transmits a signal representing the number of rotations or the angular velocity to the control unit 16. The control unit 16 may calculate the speed of the rear wheels 13 based on the received signals and compare the calculated speed with a predetermined speed V.

When the rear wheels 13 are driven, that is, the rear wheels 13 are moving at a speed higher than the predetermined speed V ("YES" in step S2), the control unit 16 determines that the power-assisted rollator 10 is moving in a normal state and continues to drive the rear wheels 13 by the motors 20.

On the other hand, when the rear wheels 13 are not driven, that is, the rear wheels are stopped or moving at a speed equal to or lower than the predetermined speed V ("NO" in step S2), the control unit 16 determines that the front wheel(s) 12 has struck a step. In this case, the control unit 16 controls the motor 20 so as to increase or reduce the driving force of the motor 20 in accordance with, e.g., the user's force to push the handles 14 (the operation force applied to the handles 14). At this point, the control unit 16 controls the motor 20 such that the motor 20 outputs a driving force larger than the driving force of the motor 20 which is generated before it is determined that the front wheel 12 has struck the step. In this example, the control unit 16 causes the motor 20 to generate a driving force larger than the driving force of the motor 20 in the normal state, so that a driving force for lifting the front wheels 12 relative to the rear wheels 13 is generated. Since the front wheel(s) 12 has struck a step and thus the power-assisted rollator 10 cannot move forward, the driving force in the forward direction of the rear wheels 13 may produce a moment on the power-assisted rollator 10 in the direction to raise the front wheels 12 so as to lift the front wheels 12.

When the control unit 16 determines that the user is trying to cause the power-assisted rollator 10 to ride over the step and further move it forward, the control unit 16 may use the time and force to push the handle 14, as described above, so as to accurately determine that the user is trying to move forward and avoid the power-assisted rollator 10 from making a determination inconsistent with the intention of the user. Thereby, it is possible to prevent the attitude of the power-assisted rollator 10 from becoming unstable and the instability from expanding, so that the user can use the power-assisted rollator 10 more reliably. It may also be possible that the above determination is based only on the force to push the handles 14. For example, when the handle 14 is pushed with a predetermined amount of force or more, it may be determined that the user tries to move and advance the power-assisted rollator 10 over the step, and the control unit 16 is able to quickly determine that the user tries to move forward without considering the time factor so that the user can raise the front wheels 12 without significantly reducing his/her walking speed. In this case, the grip sensor 24 is also taken as an example of the attitude detection unit.

It may also be possible that the control unit 16 uses an angular acceleration of the rear wheels 13, in addition to the angular velocity of the rear wheels 13, to determine whether the front wheel(s) 12 has struck a step. This may result in more accurate determination to know whether the power-assisted rollator 10 is moving or not. For example, it may also be possible that, when the angular velocity of the rear wheels 13 is equal to or lower than the predetermined angular velocity V and the angular acceleration of the rear wheels 13 is equal to or lower than a predetermined acceleration, the control unit 16 determines that the power-assisted rollator 10 has struck a step, and in other cases, the control unit 16 determines that the power-assisted rollator 10 has not struck a step.

Further, it may also be possible that, when the angular velocity of the rear wheels 13 is equal to or lower than the redetermined angular velocity V which is close to zero and a deceleration (negative acceleration) of the rear wheels 13 is equal to or greater than a predetermined threshold value, the control unit 16 determines that the front wheel(s) 12 has struck a step while the user is trying to move the power-assisted rollator 10 forward. That is, when the angular velocity of the rear wheels 13 is approximately zero and the deceleration of the rear wheels 13 is equal to or greater than a predetermined value, it is considered that the front wheel(s) 12 has struck a step and is stopped suddenly. In this case, the information from the grip sensors 24 may not necessarily be used to determine that the front wheel(s) 12 has struck a step. Therefore, the grip sensors 24 may not necessarily provided.

Further, it may also be possible that, when the pair of handles 14 are pushed with more than a predetermined amount of force for more than a predetermined amount of time, and the deceleration (negative angular acceleration) of the rear wheels 13 is equal to or greater than a predetermined threshold value, the control unit 16 determines that the front wheel(s) 12 has struck a step while the user is trying to move the power-assisted rollator 10 forward. This may result in accurate determination to know whether the power-assisted rollator 10 is moving or not. As described above, it can be determined based on the signals from the grip sensors 24 whether the pair of handles 14 are pushed with more than a predetermined amount of force for more than a predetermined amount of time.

In the above description, the angular velocity and angular acceleration of the rear wheels 13 are used. Alternatively the number of rotations and speed of the rear wheels 13, the rotation angle of the rear wheels 13, the speed of the power-assisted rollator 10, or the acceleration of the power-assisted rollator 10 which is obtained by time-differentiating the speed may be used.

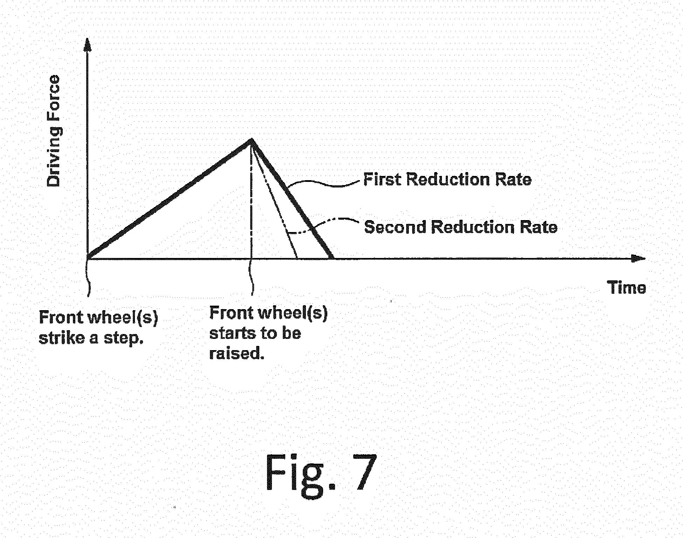

When the step is relatively low, the driving force of the rear wheels 13 described above causes the front wheels 12 to be lifted and run onto the step. When the front wheels 12 are not lifted, the user may then reduce the force to push the handles 14. At this time, the moment applied to the power-assisted rollator 10 in the direction to press down the front wheels 12 (the moment opposed to lifting of the front wheels 12) may be reduced. The control unit 16 may maintain the driving force of the rear wheels 13 in the forward direction for a period of time to drive the rear wheels 13 forward (see Fig. 7). Consequently, the moment in the direction to raise the front wheels 12 may be increased and act to lift the front wheels 12.

If the front wheels 12 are still not lifted, the user may then pull the handles 14 backward. At this time, the force to pull the handles 14 backward may produce a moment in the direction to raise the front wheels 12, and the produced moment may act to lift the front wheels 12 in cooperation with the driving force of the rear wheels 13. Thus, in addition to the driving force from the motors 20, the operation of the handles 14 by the user may produce a moment on the power-assisted rollator 10 in the direction to raise the front wheels 12 (see the arrow M in Fig. 2), thereby ensuring that the front wheels 12 are lifted (the power-assisted rollator 10 is put into wheelie). It may also be possible that the user treads a pedal (not shown) fixed behind the rotation axis of the rear wheels 13, instead of pulling the handles 14 backward, so as to raise the front wheels 12.

In this case, when the front wheels 12 are lifted relative to the rear wheels 13, a gap may be produced between the front wheels 12 and the step. Since the rear wheels 13 are driven in the forward direction, the power-assisted rollator 10 may move forward to narrow the gap until the front wheels 12 contact with the top portion of the step. Thus, the front wheels 12 can run onto the step smoothly.

After lifting the front wheels 12, the control unit 16 reduces the driving force of the rear wheels 13 in the forward direction at a first reduction rate. In this case, since the rear wheels 13 is not accelerated excessively after the front wheels 12 are raised by a predetermined height or more and climb over the step, it is possible to prevent the attitude of the power-assisted rollator 10 from becoming unstable or increasing the instability while making it possible for the front wheels 12 to ride over the step smoothly. The reduction of the driving force may be started at the timing when the conditions for the control unit 16 to control the drive units to lift the front wheels 12 (the conditions to determine that the front wheel(s) 12 has struck a step while the user is trying to move the power-assisted rollator 10 forward) become unsatisfied. For example, the reduction of the driving force may be started at the timing when the handles 14 are no longer pushed with more than a predetermined amount of force (when the user reduces the force to push the handles 14 or pulls the handles 14 backward), or when the rear wheels 13 rotate forward at a speed higher than the predetermined speed. In this case, the speed sensor 22 is also taken as an example of the attitude detection unit.

The user may then push the pair of handles 14 while the front wheels 12 are lifted up relative to the rear wheels 13. Thus, the user can move the power-assisted rollator 10 forward, and the front wheels 12 can run over the step.

By gradually reducing the driving force, it is possible to prevent the attitude of the power-assisted rollator 10 from becoming unstable and increasing the instability. However when the amount of raise of the front wheels 12 is so large or the speed or the acceleration of the power-assisted rollator 10 is so high that the user is unable to control the attitude of the power-assisted rollator 10, the driving force may be sharply reduced to promptly prevent the attitude of the power-assisted rollator 10 from becoming unstable.

Thus, when the user pulls the handles 14 backward, a moment around the rear wheels 13 can be produced. This moment may cooperate with the driving force from the motors 20, such that the front wheels 12 can be readily lifted. Thus, the user is not required to raise the power-assisted rollator 10 to allow the front wheels 12 to run over the step smoothly. As described above, it may be possible that, when the step is low, the user is not necessarily required to pull the handles 14 backward, and the front wheels 12 are lifted only by increasing the driving force from the motors 20.

As described above, when the output of the motors 20 remain increased after the front wheels 12 have run over the step, the power-assisted rollator 10 may be accelerated too much. Therefore, when any one of the following conditions (1) to (3) is satisfied after the front wheels 12 are lifted relative to the rear wheels 13, the control unit 16 may determine that the front wheels 12 have run on the step and restrain the power-assisted rollator 10 from being accelerated further. In this case, the control unit 16 may control the motors 20 such that the driving force of the rear wheels 13 by the motors 20 is reduced at a higher rate. More specifically, the reduction rate of the driving force of the rear wheels 13 in the forward direction may be set at a second reduction rate that may be higher than the first reduction rate described above (see the two-dot chain line in Fig. 7). It may also be possible that the control unit 16 may set the driving force of the rear wheels 13 in the forward direction at zero.

Condition (1): The inclination angle of the power-assisted rollator 10 sensed by the inclination sensor 23 is equal to or greater than a predetermined value (when the front wheels 12 run onto the step, the power-assisted rollator 10 is inclined). In this case, the inclination sensor 23 serves as the attitude detection unit.

Condition (2): The angular velocity of the rear wheels 13 sensed by the speed sensor 22 satisfies a predetermined condition. For example, the angular velocity or speed of the rear wheels 13 is equal to or greater than a predetermined value. (At the moment when the front wheels 12 run over the step, the angular velocity of the rear wheels 13 may increase; and when the rear wheels 13 rotate idly, the angular velocity of the rear wheels 13 may increase.) Or the speed of the power-assisted rollator 10 is equal to or greater than a predetermined value. In this case, the speed sensor 22 serves as the attitude detection unit.

Condition (3): The distance between the user and the power-assisted rollator 10 sensed by the leg detection sensor 25 is equal to or greater than a predetermined value. (At the moment when the front wheels 12 run over the step, the speed of the rear wheels 13 may increase, and the power-assisted rollator 10 may move away from the user.) In this case, the leg detection sensor 25 serves as the attitude detection unit.

The conditions used to determine that the user is trying to move the electric vehicle forward may not be limited to the above but may include one or more elements selected from, e.g., (i) the amount of rotation of the front wheels 12 or the rear wheels 13, (ii) the output from a strain gauge provided on the power-assisted rollator 10, (iii) a change in the air pressure of the tires of the front wheels 12 or the rear wheels 13, (iv) the acceleration of the power-assisted rollator 10 in the front-rear directions, (v) the output from a pressure sensor provided on the handle 14 or the like, (vi) the output from an electromyography sensor provided on the handles 14 or the like, and (vii) the movement of the feet of the user. These are examples of detection targets by the attitude detection unit.

In the embodiment as described above, when it is determined that the front wheel(s) 12 has struck a step while the user is trying to move the power-assisted rollator 10 forward, the control unit 16 controls the motors 20 such that the front wheels 12 are raised, more specifically, lifted up relative to the rear wheels 13. Thus, the front wheels 12 can readily run over the step without need of an operation causing a large load to users.

In the embodiment, when the rear wheels 13 are stopped or the angular velocity of the rear wheels 13 is equal to or less than a predetermined value V, the control unit 16 determines that the front wheel(s) 12 has struck a step. Thus, the control unit 16 can properly determine that the front wheel(s) 12 has struck the step. The existing speed sensor 22 can be used to sense that the front wheel(s) 12 has struck the step.

In the embodiment, the control unit 16 may determine via the handles 14 (the operation units) that the user is trying to move the power-assisted rollator 10 forward. Thus, when the user ordinarily operates the handles 14 as usual, the control unit 16 can properly determine that the user is trying to move the power-assisted rollator 10 forward.

In the embodiment, when the user pushes the handles 14 forward, the control unit 16 may determine that the user is trying to move the power-assisted rollator 10 forward. Thus, when the user simply performs an ordinary operation of pushing the handles 14 forward as usual, the control unit 16 can properly determine that the user is trying to move the power-assisted rollator 10 forward.

In the embodiment, when the user pushes the handles 14 with more than a predetermined amount of force, the control unit 16 may determine that the user is trying to move the power-assisted rollator 10 forward. Thus, the control unit 16 can quickly determine that the user is trying to move the power-assisted rollator forward, and the user may not need to reduce the walking speed significantly to lift the front wheels 12. The existing grip sensors 24 can be used to sense that the user is trying to move the power-assisted rollator 10 forward.

In the embodiment, when the user pushes the handles 14 with more than a predetermined amount of force for more than a predetermined amount of time, the control unit 16 may determine that the user is trying to move the power-assisted rollator 10 forward. Thus, the control unit 16 can accurately determine that the user is trying to move the power-assisted rollator 10 forward and avoid making a determination inconsistent with the intention of the user.

In the embodiment, the motors 20 drive the rear wheels 13 in the forward direction to lift the front wheels 12, and therefore, the front wheels 12 can be smoothly raised utilizing the rear wheels 13 without need of using another raising means or the like.

Moreover, in the embodiment, the motors 20 that raises the front wheels 12 drive the rear wheels 13 in the forward direction for traveling, and therefore, the front wheels 12 can be smoothly raised using the motors 20 for traveling of the rear wheels 13.

In the embodiment, the control unit 16 may increase or reduce the driving force in accordance with the force of the user to push the handles 14, and therefore, the driving force can be obtained properly from the motors 20 in accordance with the operation force applied to the handles 14 and thus in accordance with the intention of the user. Thus, it is possible to prevent the attitude of the power-assisted rollator 10 from becoming unstable.

In the embodiment, the control unit 16 may increase or reduce the driving force in accordance with the amount of time for which the user pushes the handles 14, and thus the driving force from the motors 20 may be increased or reduced gradually while the user pushes the handles 14. Therefore, the driving force can be obtained properly in accordance with the height of the step (a small driving force may be produced for a low step, and a large driving force for a high step). Consequently, it is possible to prevent the attitude of the power-assisted rollator 10 from becoming unstable.

In the embodiment, the control unit 16 may cause the front wheels 12 to be lifted relative to the rear wheels 13, and then control the motors 20 to cause the power-assisted rollator 10 to move forward such that the front wheels 12 contact with the top portion of the step. Therefore, the front wheels 12 can smoothly run onto the step.

In the embodiment, when it is determined that the front wheel(s) 12 has struck a step, the control unit 16 controls the motors 20 to cause the front wheels 12 to be lifted at the timing when the force to push the handles 14 forward or to pull the handles 14 backward by the user is reduced. Therefore, the front wheels 12 are securely lifted using the operation force on the handles and the driving force from the motors 20.

In the embodiment, the control unit 16 causes the front wheels 12 to be lifted relative to the rear wheels 13, and then reduces the driving force of the rear wheels 13 in the forward direction. Thus, it is possible to prevent sudden acceleration immediately after the raised front wheels 12 contacts with the ground again. Consequently, it is possible to prevent the attitude of the power-assisted rollator 10 from becoming unstable.

In the embodiment, when the rotation angle of the rear wheels 13 reaches to a predetermined angle or more, the control unit 16 may gradually reduce the driving force of the rear wheels 13 in the forward direction. Thus, when the rear wheels 13 starts to rotate, the control unit 16 can determine that the front wheels 12 have been raised.

In the embodiment, when the rear wheels 13 rotate, the control unit 16 may reduce the driving force of the rear wheels 13 in the forward direction at a higher rate in accordance with the rotation speed thereof, or set the driving force of the rear wheels 13 in the forward direction at zero. Thus, when the rotation speed of the rear wheels 13 is suddenly increased, the control unit 16 may reduce the driving force of the rear wheels 13 significantly so as to prevent sudden acceleration of the power-assisted rollator 10 or idling of the rear wheels 13. Consequently, it is possible to prevent the attitude of the power-assisted rollator 10 from becoming unstable.

In the embodiment, the control unit 16 may cause the front wheels 12 to be lifted relative to the rear wheels 13, and then reduce the driving force of the rear wheels 13 in the forward direction at a higher rate in accordance with the inclination angle of the power-assisted rollator 10, or set the driving force of the rear wheels 13 in the forward direction at zero. Thus, it is possible to prevent the power-assisted rollator 10 from falling backward when it is inclined at an angle larger than an allowable angle. In addition, it is possible to prevent the control unit 16 from driving the motors 20 independently of the intention of the user when the power-assisted rollator 10 is inclined backward and thus the hands of the user gripping the handles 14 pushes the handles 14 forward.

Modification Examples of Method of Lifting Front Wheels

The following are modification examples of the methods for the control unit 16 to control the motors 20 to cause the front wheels 12 to be lifted.

Modification Example 1

In the embodiment described above, the control unit 16 may automatically determine that the front wheel(s) 12 has struck a step. Alternatively, it may also be possible that the control unit 16 causes the front wheels 12 to be lifted in accordance with a predetermined operation by the user, irrespective of whether the front wheels have actually struck a step.

In this case, the user may first operate the brake levers 34 manually and pull the handles 14 backward. At this time, the control unit 16 recognizes by a sensor (not shown) that the brake levers 34 are operated and recognizes that the handles 14 are pulled backward, based on the signals from the grip sensors 24.

As in the embodiment described above, the control unit 16 then increases the output of the motors 20 to cause the front wheels 12 to be lifted relative to the rear wheels 13 (the power-assisted rollator 10 is put into wheelie). The user may then push the pair of handles 14 while the front wheels 12 are lifted up relative to the rear wheels 13. Thus, the user can move the power-assisted rollator 10 forward, and the front wheels 12 can run over the step. During this operation, the user continues to operate the brake levers 34 manually. After the front wheels 12 have run over the step, the user may take his/her hands away from the brake levers 34. Through such operation, the control unit 16 can accurately recognize whether the user is trying to cause the power-assisted rollator 10 to run over a step or trying to pull the power-assisted rollator 10 backward.

The method for the control unit 16 to recognize whether the user is trying to cause the front wheels 12 to be lifted may not be limited to use of the brake levers 34 by the user and may employ other approaches. For example, it may also be possible that when the user operates an operation means such as a press button switch (not shown) provided on the handles 14, the control unit 16 may control the motors 20 to cause the front wheels 12 to be lifted relative to the rear wheels 13.

According to this variation, when the user pulls the handles 14 backward, a moment around the rear wheels 13 can be produced. This moment may cooperate with the driving force from the motors 20, such that the front wheels 12 can be readily lifted. Thus, the user is not required to raise the power-assisted rollator 10 to allow the front wheels 12 to run over the step smoothly. According to this variation, the front wheels 12 can be lifted relative to the rear wheels 13 as necessary, even when the front wheels 12 have not struck the step. In particular, in the case where the front wheels 12 can be lifted by the operation of the brake levers 34, there is no need of additionally providing a dedicated operation means, and the front wheels 12 can be raised smoothly by using the brake levers 34.

Modification Example 2

The power-assisted rollator 10 in this example is provided with a function to automatically brake the rear wheels 13 such that the power-assisted rollator 10 is not accelerated too much on a downslope (an automatic brake function). In addition, the front wheels 12 may strike a step while the power-assisted rollator 10 is traveling on a downslope.

In this modification example, the control unit 16 cancels the automatic brake function when it determines that the front wheel(s) 12 has struck a step while the power-assisted rollator 10 is on a downslope and the user is trying to move the power-assisted rollator 10 forward. As in the embodiment described above, the control unit 16 then increases the output of the motors 20 thereby to increase the driving force of the rear wheels 13 in the forward direction. The control unit 16 may determine whether the power-assisted rollator 10 is on a downslope based on the signals from the inclination sensor 23.

In this modification example, it is possible to prevent the automatic brake function from making it difficult for the front wheels 12 to run over the step.

Second Embodiment

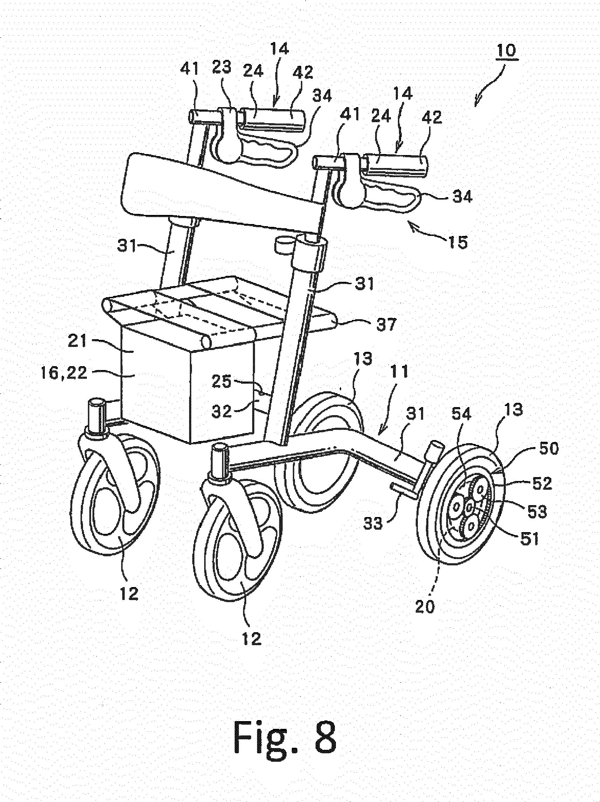

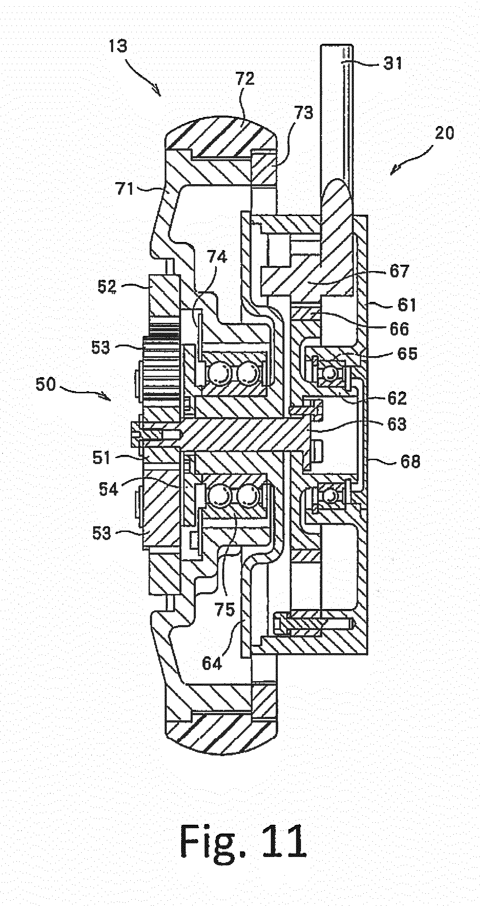

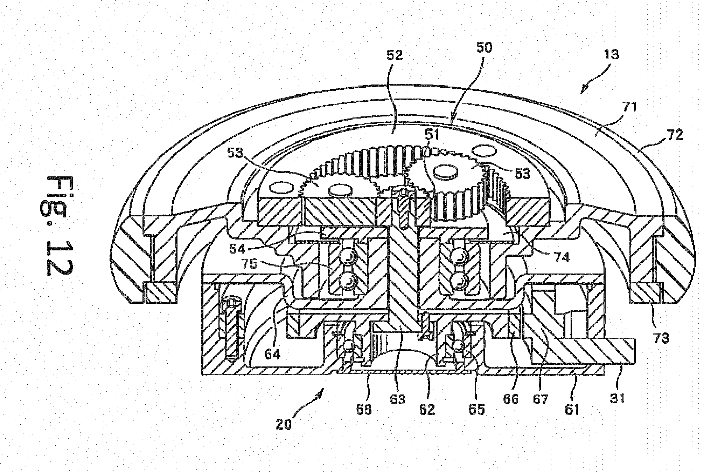

Next, the second embodiment of the invention will be described. The second embodiment shown in Figs. 8 to 14 may have different features related to the rear wheels 13 and the motors 20. In other respects, this embodiment may be configured in substantially the same way as the first embodiment. In Figs. 8 to 14, the same elements as in the first embodiment are denoted by the same reference numerals and detailed descriptions thereof will be omitted.

In the arrangement shown in Figs. 8 to 12, the motors 20 of the power-assisted rollator 10 are connected to the rear wheels 13 via associated planetary gear mechanisms 50.

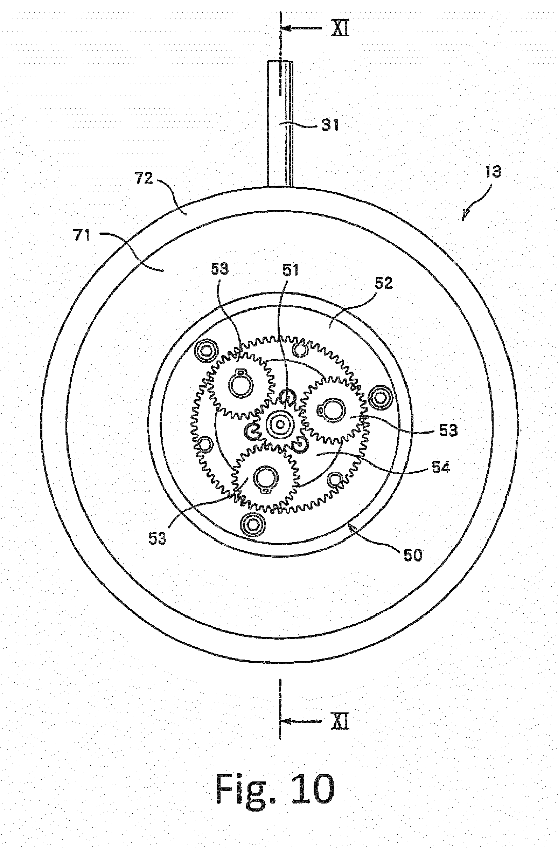

As shown in Figs. 10 to 12, each of the motors 20 includes a housing 61 fixed on the pipe frame 31, an output shaft support 62 housed in the housing 61 and rotatable on the housing 61, and an output shaft 63 fixed on the output shaft support 62 and configured to rotate integrally with the output shaft support 62. A flange 64 is fixed on the housing 61, and the output shaft 63 may be projected from a middle portion of the housing 61. Between the housing 61 and the output shaft support 62, a bearing 65 is interposed. On the outer periphery of the output shaft support 62, a magnet 66 is provided. Further, a coil 67 is disposed around the magnet 66, and the coil 67 is fixed on the housing 61. The coil 67 is fed with electric power from the battery 21 and causes rotation of the output shaft support 62 having the magnet 66 provided thereon. A cap 68 is provided in the middle portion of the housing 61.

The rear wheel 13 includes a wheel 71, a tire 72 provided on the outer periphery of the wheel 71, and a wheel retainer 73 connected to the wheel 71. The wheel 71 may be fixed on a bearing 75 provided around the flange 64 via a retainer plate 74.

The planetary gear mechanism 50 includes a sun gear 51, an internal tooth gear 52 disposed around the sun gear 51, three planet gears 53 meshing with the sun gear 51 and the internal tooth gear 52 and configured to rotate and revolve when the output shaft 63 rotates, and a planet carrier 54 that rotatably supports the three planet gears 53 and receives the revolution movement of the planet gears 53.

The sun gear 51 may be connected to the output shaft 63 of the motor 20 and may be rotatable in accordance with the rotation of the output shaft 63. The internal tooth gear 52 may be connected to the wheel 71 of the rear wheel 13. The planet carrier 54 may be connected to the flange 64 of the motor 20 and may be fixed on the pipe frame 31 via the flange 64 and the housing 61.

The following is the action of controlling the motors 20 to cause the front wheels 12 to be lifted relative to the rear wheels 13 (the power-assisted rollator 10 is put into wheelie) in the embodiment.

First, it is supposed that the power-assisted rollator 10 is moving normally with the front wheels 12 thereof not striking a step. In this case, the assist force from the output shaft 63 of the motor 20 may be transmitted from the sun gear 51 connected to the output shaft 63 of the motor 20 to the internal tooth gear 52 via the planet gears 53, and then transmitted to the rear wheel 13 connected to the internal tooth gear 52. Thus, the motor 20 may assist the movement of the reel wheel 13. At this time, the pipe frame 31 connected to the planet carrier 54 may not rotate.

With the numbers of teeth of the sun gear 51 and the internal tooth gear 52 represented by Za, Zc (Za < Zc), respectively, and the angular speeds of the sun gear 51, the internal tooth tear 52, and the planet carrier 54 represented by Wa, Wc, Wx, respectively, Formula (1) is obtained.

$$Zc(Wc-Wx)=-Za(Wa-Wx) \qquad \text{Formula (1)}$$

When the power-assisted rollator 10 is moving normally, the planet carrier 54 may be fixed, and thus Wx is zero. Therefore, Formula (2) is obtained.

$$Wc=(-Za/Zc)Wa \qquad \text{Formula (2)}$$

That is, the number of rotations of the output shaft 63 of the motor 20 may be reduced to -Za/Zc times of that and transmitted.

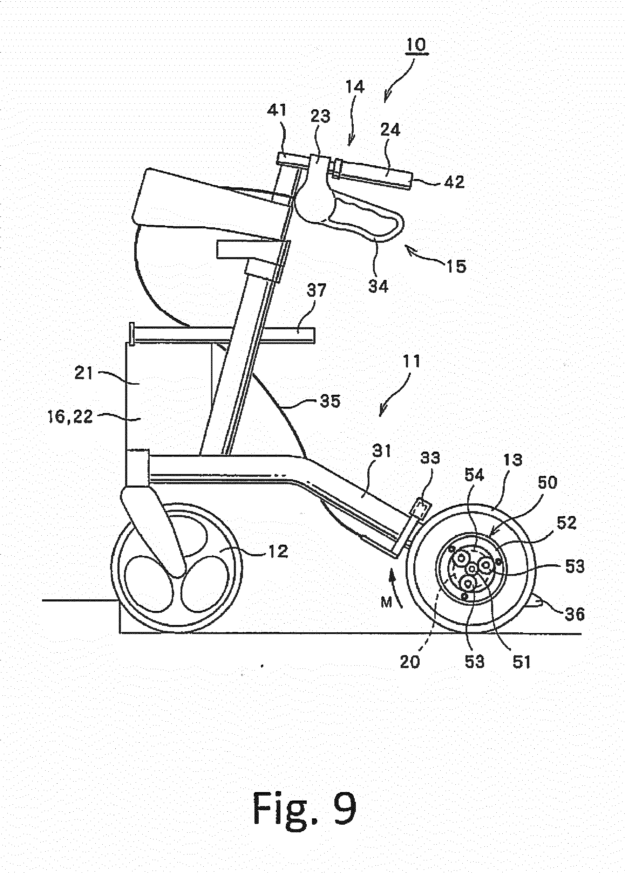

On the other hand, when the front wheels 12 of the power-assisted rollator 10 strike a step, the front wheels 12 may be locked and the rear wheels 13 may also stop rotating. At this time, the internal tooth gear 52 of the planetary gear mechanism 50 connected to the rear wheel 13 may also be locked. The rotational force from the output shaft 63 of the motor 20 may be transmitted to the sun gear 51 connected to the output shaft 63. This rotational force may be transmitted from the sun gear 51 to the planet carrier 54 via the planet gears 53 and may act on the pipe frame 31 connected to the planet carrier 54 in the direction of the arrow M (see Fig. 9) (in the direction opposite to the traveling direction of the power-assisted rollator 10).

Accordingly, when the front wheels 12 strike a step, the control unit 16 may control the motors 20, so as to rotate the entirety of the power-assisted rollator 10 and lift the front wheels 12 relative to the rear wheels 13. In this case, the control unit 16 may increase the output of the motor 20 in accordance with the operation force (the grip force) applied to the handles 14. More specifically, when the motors 20 are controlled such that the output of the motor 20 is larger for the same operation force than in the normal state (that is, the proportional factor of the motor output for multiplication of the operation force is larger), the front wheels 12 can be lifted relative to the rear wheels 13.

Thus, when the front wheels 12 of the power-assisted rollator 10 strikes a step, the internal tooth gear 52 may be fixed, and therefore, Wc in Formula (1) is zero. Therefore, Formula (3) is obtained.

$$Wx=\{Za/(Zc+Za)\}Wa \qquad \text{Formula (3)}$$

That is, the number of rotations of the output shaft 63 of the motor 20 may be reduced to Za/(Zc+Za) times that, and the entirety of the power-assisted rollator 10 connected to the planet carrier 54 may receive a rotational force in the direction opposite to the traveling direction (in the direction for lifting the front wheels 12).

As described above, according to the embodiment, the motors 20 may be connected to the rear wheels 13 via the planetary gear mechanisms 50. Thus, when the front wheels 12 of the power-assisted rollator 10 strike a step, the front wheels 12 can be lifted relative to the rear wheels 13 using the planetary gear mechanisms 50. That is, the control unit 16 can cause the front wheels 12 to be lifted relative to the rear wheels 13 (the power-assisted rollator 10 is put into wheelie) by the driving force of the motors 20 and the reaction of the planetary gear mechanisms 50.

In the embodiment, the planetary gear mechanism 50 may include a sun gear 51 connected to the output shaft of the motor 20, an internal tooth gear 52 disposed around the sun gear 51, planet gears 53 meshing with the sun gear 51 and the internal tooth gear 52 and configured to rotate and revolve when the output shaft 63 rotates, and a planet carrier 54 that rotatably supports the planet gears 53 and receives the revolution movement of the planet gears 53. The internal tooth gear 52 may be connected to the rear wheels 13, and the planet carrier 54 may be fixed on the pipe frame 31. Thus, when the front wheel 12 strike a step, the rotational force from the output shaft 63 of the motor 20 may be transmitted from the sun gear 51 to the planet carrier 54 via the planet gears 53 and may act on the pipe frame 31 connected to the planet carrier 54. Thus, the entirety of the power-assisted rollator 10 can be rotated and the front wheels 12 can be lifted relative to the rear wheels 13.

In the embodiment, the control unit 16 may cause the front wheels 12 to be lifted relative to the rear wheels 13 using the planetary gear mechanisms 50. It may also be possible to replace the planetary gear mechanisms 50 with eccentric reducers or other mechanisms including gears that rotate and revolve.

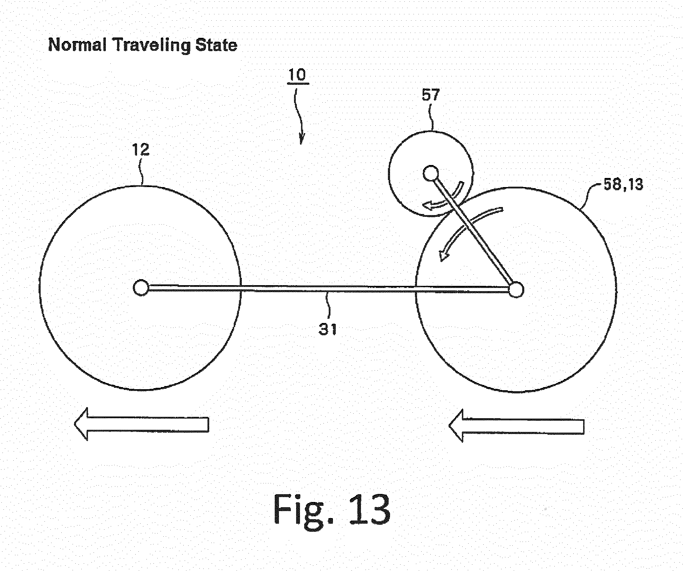

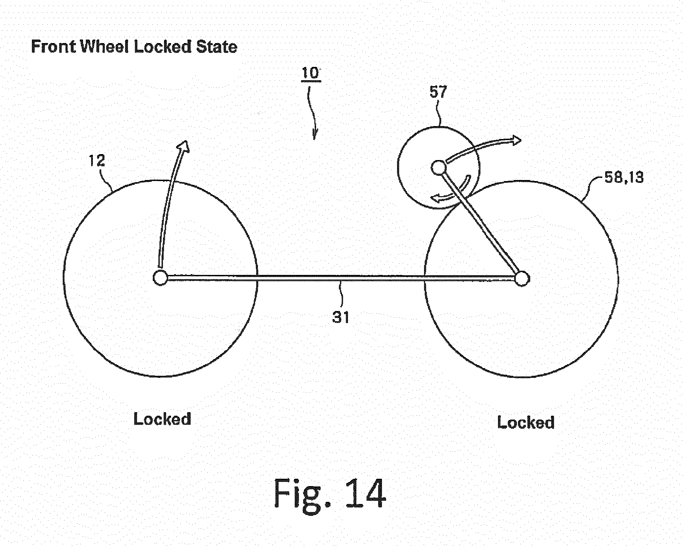

Alternatively, the planetary gear mechanism 50 may be replaced with a mechanism including two gears. More specifically, as shown in Figs. 13 and 14, a first gear 57 may be directly connected to the motor 20, a second gear 58 may be directly connected to the rear wheel 13, and the first gear 57 and the second gear 58 may mesh with each other. As shown in Fig. 13, in normal traveling, the power-assisted rollator 10 may travel with the motor 20 assisting the rear wheel 13 in moving. On the other hand, as shown in Fig. 14, when the front wheel 12 strikes a step and the front wheel 12 is locked, the rear wheel 13 may be also locked. When the motor 20 further rotates, a force may be generated so as to lift the entirety of the power-assisted rollator 10. At this time, a force may act to rotate in the direction opposite to traveling of the power-assisted rollator 10. Thus, the front wheels 12 of the power-assisted rollator 10 can readily run over the step.

Third Embodiment

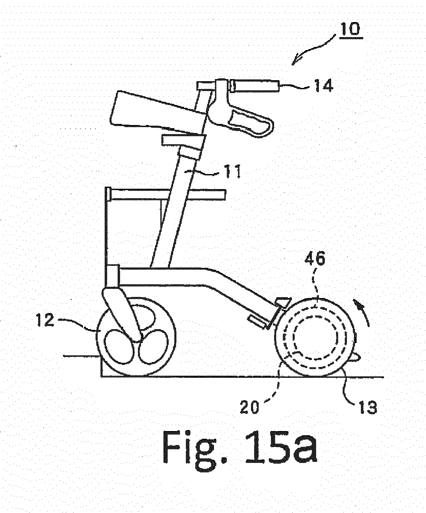

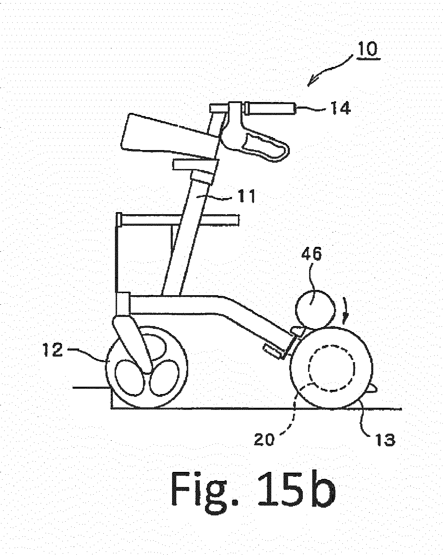

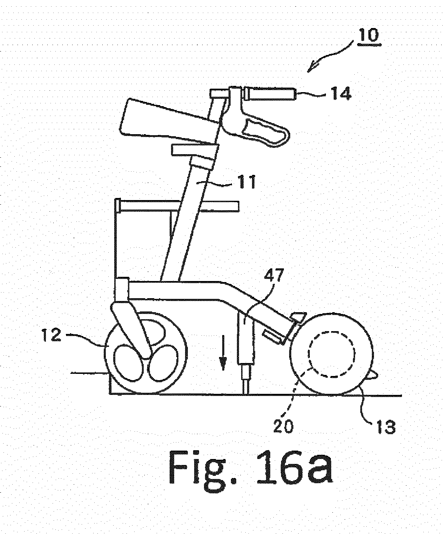

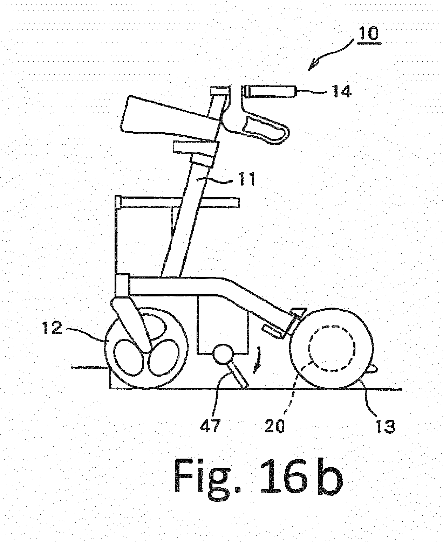

Next, the third embodiment of the invention will be described. The third embodiment shown in Figs. 15a, 15b, 16a, and 16b is different from the first embodiment in that the drive units for generating a driving force for lifting the front wheels 12 may be separate from the motors 20. in other respects, this embodiment is configured in substantially the same way as the first embodiment. In Figs. 15a, 15b, 16a, and 16b, the same elements as in the first embodiment are denoted by the same reference numerals and detailed descriptions thereof will be omitted.

In Figs. 15a and 15b, the drive units for generating a driving force for lifting the front wheels 12 include additional motors 46 which are different from the motors 20. The rotation axis of the additional motors 46 may be either the same as the rotation axis of the rear wheels 13 (Fig. 15a) or different from the rotation axis of the rear wheels 13 (Fig. 15b).

In Figs. 16a and 16b, the drive unit for generating a driving force for lifting the front wheels 12 include actuators 47 which are different from the motors 20. The actuators 47 are connected to the frame 11. In this arrangement, the actuator 47 may be either an expanding actuator or a rocking actuator. The expanding actuator may expand and contract to lift the front wheels 12 relative to the rear wheels 13 (Fig. 16a), while the rocking actuator may rock to lift the front wheels 12 relative to the rear wheels 13 (Fig. 16b).

In Figs. 15a, 15b, 16a, and 16b, the motors 20 may not be necessarily provided.

Fourth Embodiment

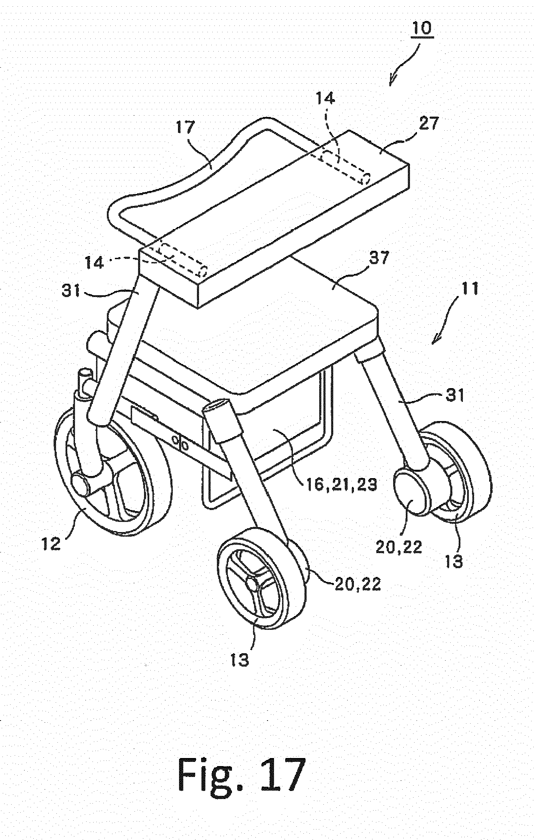

Following is description of the fourth embodiment with reference to Fig. 17. In Fig. 17, the same elements as in the first to third embodiments are denoted by the same reference numerals and detailed descriptions thereof will be omitted.

Fig. 17 is a schematic perspective view of an example of an external appearance of a power-assisted rollator (an electric vehicle) 10 according to the embodiment.

Configuration of Power-Assisted Rollator

As shown in Fig. 17, the power-assisted rollator 10 includes the frame 11, the pair of front wheels 12 and the pair of rear wheels 13 provided on the frame 11, and the pair of handles 14 connected to the frame 11.

The pair of rear wheels 13 each have the motor 20 coupled thereto for assisting rotation of the corresponding rear wheel 13. The battery 21 and the control unit 16 are mounted to the frame 11. The control unit 16 may have the inclination sensor 23.

In the embodiment, on the upper ends of the left and right pipe frames 31, there may be provided a pair of handles 14 to be operated by a user. The pair of handles 14 may be connected to each other via a bar handle 17 extending horizontally. The pair of handles 14 and the bar handle 17 may constitute a substantial U-shape. An armrest 27 that can support elbows of a user is further attached to the pair of handles 14. The armrest 27 has openings in which the handles 14 can be inserted respectively for attaching thereto.

Between the left-right pair of pipe frames 31, there is provided a seat 37 on which a user can sit as necessary.

The battery 21 supplies power to the elements of the power-assisted rollator 10 such as the motors 20 and the control unit 16. The battery 21 is provided below the seat 37 positioned between the pair of pipe frames 31.

Each of the pair of rear wheels 13 is provided with the speed sensor 22. The speed sensor 22 may also be installed in any of the components such as the frame 11 and the pair of handles 14, instead of the pair of front wheels 12 and/or the pair of rear wheels 13. Alternatively, it may be possible that the speed sensor 22 is disposed adjacent to the control unit 16.

Alternatively, it may also be possible that the speed sensor 22 is constituted by an acceleration sensor. In this case, without using the angular acceleration of the rear wheels 13, the acceleration sensor directly senses an acceleration of the power-assisted rollator 10 and transmits a signal representing the acceleration to the control unit 16. Furthermore, the control unit 16 is configured to calculate a speed by time-integrating the acceleration.

When the speed detection sensor 22 includes a Global Positioning System (GPS), the position of the power-assisted rollator 10 can be detected without using the angular acceleration of the rear wheels 13. Furthermore, the control unit 16 may be configured to time-differentiate positional information from the GPS device to calculate a speed of the power-assisted rollator 10, and time-differentiate the positional information from the GPS device twice to calculate an acceleration of the rollator.

The inclination sensor 23 may be constituted by an acceleration sensor having two or more axes. The inclination sensor 23 is disposed adjacent to the control unit 16. Alternatively, it may be possible that the inclination sensor 23 is provided in the upper portion of the power-assisted rollator 10. In addition, it may also be possible that the inclination sensor 23 is constituted by a gyro sensor, instead of the acceleration sensor, for sensing the attitude of the power-assisted rollator 10.

Note that the speed sensor 22, the inclination sensor 23, and sensors or the like that are alternatives thereto also serve as the attitude detection unit that detects the attitude of the electric vehicle. Other features of the power-assisted rollator 10 are substantially the same as those of the power-assisted rollator 10 of the first embodiment (Figs. 1 and 2).

In the embodiment, the power-assisted rollator 10 may have no grip sensor, strain sensor, proximity sensor, or pressure sensor that may directly sense whether or not the user grips the pair of handles 14. However, this is not limitative. In the embodiment, it may be possible that the power-assisted rollator 10 includes grip sensors 24 on the handles 14 as in the first embodiment (Figs. 1 and 2). The gripping sensor 24 and other sensors or the like which are alternative to the gripping sensor 24 also function as the attitude detection unit.

Also in the power-assisted rollator 10 according to the fourth embodiment having the above-described configuration, the control unit 16 detects a predetermined state in the same manner as the first embodiment to determine whether the front wheel(s) 12 has struck a step while a user is trying to move the power-assisted rollator 10 forward, and thereafter, the control unit 16 controls the motors 20 to cause the front wheels 12 to be lifted up relative to the rear wheels 13. After the front wheels 12 are lifted relative to the rear wheels 13, the control unit 16 performs the same control as that in the first embodiment, for example, performs the control to gradually reduce the driving force and the like. Therefore, in the same way as the first embodiment, it is possible to prevent the attitude of the power-assisted rollator 10 from becoming unstable.

Fifth Embodiment

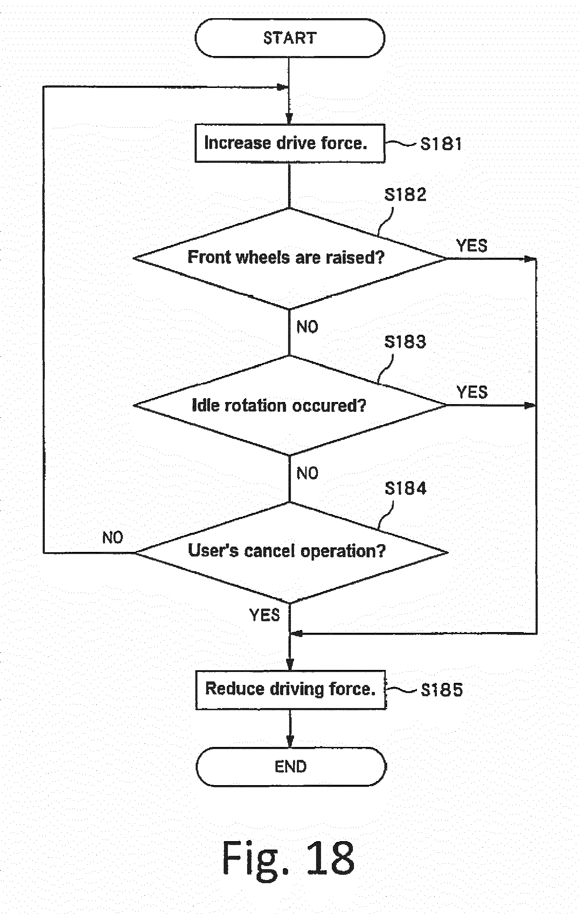

Next, the fifth embodiment of the invention will be described. Fig. 18 is a flowchart for describing an operation of the control unit 16 in the power-assisted rollator 10 according to the fifth embodiment. In the following description of the fifth embodiment, the same elements as those in the first embodiment are denoted by the same reference numerals and detailed descriptions thereof will be omitted.

In the first embodiment described above, when the control unit 16 determines that the front wheel(s) 12 has struck a step while the user is trying to move the power-assisted rollator 10 forward, the control unit 16 is configured to shift to a state where it causes the motors 20 to generate a driving force to lift the front wheels (hereinafter may be referred to as the "step mode.") It has been described that the control unit 16 may gradually or rapidly reduce the driving force in the forward direction of the rear wheel 13 after shifting to the state where it causes the front wheel 12 to be lifted. Then, as for the timing to start the process of reducing the driving force (escaping from the step mode), described above are when the handle(s) 14 is no longer pushed with a predetermined amount of force or more, when the handle(s) 14 is pulled backward, when the rear wheels 13 rotate in the forward direction at more than a predetermined angular velocity, or the like.

In the fifth embodiment, the control unit 16 sequentially determines various states of the power-assisted rollator 10 that trigger the escape from the step mode, and the control unit 16 escapes from the step mode when any one of such states is detected (before the attitude of the power-assisted rollator 10 becomes unstable), so that the attitude of the power-assisted rollator 10 is prevented from becoming unstable. With reference to Fig. 18, the flow of the operation of the control unit 16 according to the fifth embodiment will be now described.

The process illustrated in Fig. 18 is started when the control unit 16 determines that the front wheel(s) 12 has struck a step while a user is trying to move the power-assisted rollator 10 forward. The control unit 16 first increases the driving force of the motors 20 in order to lift the front wheels 12 in step S181. In this way, the control unit 16 shifts to the step state.

After the control unit 16 has shifted to the step state, the control unit 16 determines, in step S182, whether the front wheels 12 are actually lifted or not, more specifically, determines if the front wheels 12 are raised to a predetermined height or more relative to the rear wheels 13. Here, the predetermined height is a height such that the user becomes unable to control the attitude of the power-assisted rollator 10. In this embodiment, the control unit 16 detects the raise of the front wheels 12 by detecting that the tilt angle of the power-assisted rollator 10 is equal to or larger than a predetermined angle. The inclination angle of the power-assisted rollator 10 is detected by the inclination sensor 23 that is included in the attitude detection unit and then the detected inclination angle is output to the control unit 16. The raise of the front wheels 12 used in the determination at step S182 is a raise of the front wheels 12 to the extent that the attitude of the power-assisted rollator 10 is expected to become unstable. Therefore, the criterion (in this embodiment, the inclination angle or a predetermined value for height determination which will be described later, the angular velocity of the rear wheels 13, an acceleration and the like.) for determining the raise of the front wheels 12 performed in step S182 may be set to the amount or value where it is determined that the front wheels 12 run onto a step (not less than the prescribed inclination angle in this embodiment). It should be noted that the inclination angle used to determine the raise of the front wheels 12 in step S182 is an angle with respect to a vertical direction which is the gravity direction perpendicular to the straight line connecting the center axis of the front wheels 12 and the center axis of the rear wheels 13.

When the raise of the front wheels 12 is detected in step S182, the control unit 16 proceeds to step S185 of the process where the driving force generated by the motor 20 is reduced and then shifts to the normal state (END). Instead of detecting the lifting (raise) based on the inclination angle as described above, the control unit 16 may detect the raise of the front wheels 12 by detecting that the rear wheels 13 is rotated by a predetermined angle or more after shifting to the step mode. Further, to detect the raise of the front wheels 12, the control unit 16 may detect that the angular velocity of the rear wheels 13 in the forward direction reaches to or exceeds a first predetermined speed, the number of rotations of the rear wheels 13 reaches to or exceeds a predetermined number, the speed of the rear wheels 13 reaches to or exceeds a predetermined speed, or the angular acceleration of the rear wheels 13 in the forward direction reaches to or exceeds a first predetermined angular acceleration. In this case, the speed sensor 22 and sensors or the like that are alternatives to the speed sensor 22 also serve as the attitude detection unit that detects the attitude of the electric vehicle. Alternatively, the control unit 16 may determine the raise of the front wheels 12 in step S182 by detecting that the front wheels 12 are raised by a predetermined value or more. The predetermined value for determining the raise of the front wheels 12 is a height with respect to a reference plane such a horizontal plane, or a height in a direction perpendicular to the straight line connecting the center axis of the front wheels 12 and the center axis of the rear wheels 13. The reference plane for the height of the front wheels 12 may be changed in accordance with the state (mode) of the power-assisted rollator 10. For example, when the rollator enters in the step mode while the rollator is going up or down a slope, using the inclined road surface of the slope as a reference plane and the height of the front wheels 12 may be detected as the position of the front wheels 12 spaced from the reference plane in a direction orthogonal to the reference plane. The height of the front wheels 12 may be detected by, for example, an optical sensor that irradiates light to the road surface. In this case, the optical sensor is included in the attitude detection unit for detecting the attitude of the electric vehicle.

Further, after the control unit 16 causes the motors 20 to generate the driving force, the control unit 16 may shift to step S185 of the process and reduce the driving force generated by the motors 20, which is the drive unit, when the control unit 16 detects that a current of the motor(s) 20, in other words, a current or voltage for driving the motor(s) 20 decreases to or below a predetermined value, or that the amount of change per unit time (the absolute value of the change amount) of the current or voltage of the motor(s) 20 becomes equal to or larger than a predetermined value. Alternatively, after the control unit 16 causes the motors 20 to generate the driving force, the control unit 16 may shift to step S185 of the process and reduce the driving force generated by the motors 20, when the control unit 16 detects that a torque of the motor(s) 20 decreases to or below a predetermined value, or that the amount of change per unit time (the absolute value of the change amount) of the torque of the motor(s) 20 becomes equal to or larger than a predetermined value. When lifting the front wheels 12 such that the front wheels 12 ride on a step, the current for driving the motor(s) 20 is increased and its torque increases. On the other hand, when the front wheels 12 is lifted, a resistance hindering the rise of the front wheels tends to decreases, and the required torque decreases. Correspondingly, the current for driving the motor(s) 20 and the generated torque decrease. Therefore, by using the current, voltage, torque of the motor(s) 20, or the amount of change thereof, it is also possible to adequately determine the raise of the front wheels 12. The torque generated by the motor(s) 20 may be detected by, for example, a strain sensor provided on the axle of the rear wheels 13 or the drive shaft of the motor(s) 20. Further, the current, voltage, or torque of the motor(s) 20, or the amount of change thereof described herein can also be used to determine whether the rear wheels 13 idly rotate, which will be described later. When determination of the idle rotation state of the rear wheels 13 is performed using these values, different threshold values (predetermined values for determination) may be used between the determination of the raise of the front wheels 12 and the determination of the idle rotation of the rear wheels 13. Sensors and the like that measure the current, voltage, torque, or the amount of change therein are included in the attitude detection unit detecting the attitude of the electric vehicle.

On the other hand, if the raise of the front wheels 12 is not detected in step S182, the control unit 16 determines in step S183 whether the rear wheels 13 have idly rotated. In this embodiment, the control unit 16 detects the idle rotation of the rear wheels 13 by detecting that a difference of the angular acceleration between the left rear wheel 13 and the right rear wheel 13 reaches to or exceeds a predetermined value. In this example, the difference of the angular acceleration between the left rear wheel 13 and the right rear wheel 13 is calculated based on the angular velocities of the left and right rear wheels 13 detected by the speed sensor 22. More specifically, the angular acceleration difference is obtained by differentiating the angular velocities of the left and right rear wheels 13 detected by the speed sensor 22 included in the attitude detection unit to obtain accelerations of the left and right rear wheels 13 respectively, and then performing subtraction between the obtained accelerations to obtain the angular acceleration difference.

If the speed sensor 22 is able to directly detect the angular accelerations of the rear wheels 13, the difference can be obtained by performing subtraction between values of the angular accelerations detected by the speed sensor 22. Instead of such detection of idle rotation of the rear wheels 13 based on a difference in angular acceleration between the left and right rear wheels 13, the control unit 16 may determine that the speed of the rear wheels 13 in the forward direction reaches to or exceeds a predetermined speed or that the accelerations of the rear wheels 13 in the forward direction reaches to or exceeds a predetermined acceleration, in order to detect the idle rotation of the rear wheels 13.

In this case, when the control unit 16 is configured to detect the raise of the rear wheels 13 by detecting that the speed of the rear wheels 13 in the forward direction reaches to or exceeds the first predetermined speed, or that the acceleration of the rear wheels 13 in the forward direction reaches to or exceeds the first predetermined acceleration, the control unit 16 detects idle rotation of the rear wheels 13 by determining that the speed of the rear wheels 13 in the forward direction reaches to or exceeds a second predetermined speed higher than the first predetermined speed, or detecting that the acceleration of the rear wheels 13 in the forward direction reaches to or exceeds a second acceleration greater than the first predetermined acceleration. Note that the first predetermined speed and the second predetermined speed may be the same value and the first predetermined acceleration and the second predetermined acceleration may be the same value. Further, in the embodiment, when the idle rotation of the rear wheels 13 is detected, the driving force reduction process is performed. However, the driving force reduction process may be performed when the idle rotation of the front wheels 12 is detected.

When the idle rotation of the front wheels 13 is detected in step S183, similar to the above described process, the control unit 16 proceeds to step S185 of the process where the driving force generated by the motor 20 is reduced and then shifts to the normal state (END). Whereas when the idle rotation of the rear wheels 13 is not detected, the control unit 16 determines in step S184 whether the user tries to cancel the step mode. In the embodiment, the control unit 16 detects, for example, that the speed of the rear wheels 13 in the backward direction reaches to or exceeds a predetermined speed to know that a force pushing the power-assisted rollator 10 backward is applied to the handles which the user operates. Thereby the control unit 16 detects that the user tries to cancel the step mode.

Alternatively, the determination as to whether the user tries to cancel the step mode may be performed by detecting whether the acceleration of the rear wheels 13 in the backward direction reaches to or exceeds a predetermined acceleration. Alternatively, the determination as to whether the user tries to cancel the step mode may be performed by detecting that the handles 14 are pulled in the backward direction based on the force applied to the handles 14. More specifically, the control unit 16 may detect that the handles 14 are pulled in the backward direction based on a force in the front-rear directions applied to the handles 14 by the hands of the user, which may be detected by the grip sensors 24 (the attitude detection unit) provided on the handle 14.

When the control unit 16 detects that the user tries to cancel the step mode in step S184, similar to the above described process, the control unit 16 proceeds to step S185 of the process where the driving force generated by the motors 20 is reduced and then shifts to the normal state (END).

Describing step S185 specifically, the control unit 16 reduces the driving force generated by the motors 20 and when the driving force of the motors 20 is reduce to the normal driving force, it is considered as the rollator is escaped from the step mode. Thereafter, the control unit 16 monitors to detect that the front wheel(s) 12 has struck a step while a user is trying to move the power-assisted rollator 10 forward, and when it detects the striking to the step, the process shown in Fig. 18 is carried out.

In such step S185, the control unit 16 may increase or decrease the reduction rate of the driving force generated by the motors 20 in accordance with at least one of the angular velocity or the angular acceleration of the rear wheels 13 after the raise of the front wheels 12 is detected. More specifically, for example, the control unit 16 may increase the reduction rate of the driving force generated by the motors 20 as the angular velocity or the angular acceleration of the rear wheel 13 increases after detecting the raise of the front wheels 12. After the raise detected in step S182, the greater the angular velocity and the angular acceleration of the rear wheels 13, the higher the possibility that thereafter the power-assisted rollator 10 rapidly accelerates or the rear wheels 13 idly rotate. Therefore, as the angular velocity and the angular acceleration are higher, the driving force of the motors 20 is greatly reduced, so that the above-described rapid acceleration and idle rotation can be prevented. More specifically, for example, the control unit 16 may reduce the driving force generated by the motors 20 to zero in accordance with at least one of the angular velocity or the angular acceleration of the rear wheels 13 after detecting the raise of the front wheels 12. Also in this case, it is possible to prevent the above-described rapid acceleration and idle rotation. It should be noted that the control unit may increase or decrease the reduction rate of the driving force generated by the motors 20 as described above according to the number of rotations and the speed of the rear wheels 13 after the raise of the front wheels 12 is detected.

Further, the control unit 16 may increase the reduction rate of the driving force generated by the motors 20 in accordance with the inclination angle of the power-assisted rollator 10 after the detection of the raise of the front wheels 12 in step S182, or the control unit 16 may reduce the driving force generated by the motors 20 to zero. It is also possible in this case to carry out adequate driving force reduction control according to the situation after the raise detection, that is, according to the degree of raise, so that it is possible to quickly bring the power-assisted rollator 10 under control to a stable state after the driving force is reduced. More specifically, when the tilt angle of the power-assisted rollator 10 after the raise is detected is excessively large, the driving force may be greatly reduced to reduce the risk that the power-assisted rollator 10 is inclined more than the allowable angle and prevent the rollator 10 from falling backward.

In addition, the reduction rate of the driving force generated by the motors 20 may be made different by the control unit 16 between when it detects that the front wheels 12 is raised, that at least one of the front wheel(s) 12 or the rear wheel(s) 13 rotates idly, and that a user tries to escape from the state where the driving force is generated by the motors 20 (the step mode). With such a configuration, when a state that triggers the reduction of the driving force of the motors 20 is detected during the step mode, it is possible to perform an appropriate driving force reduction control depending on the type, so that the power-assisted rollator 10 can be brought under control to a stable state.

In the fifth embodiment described above, when it is determined that the front wheel(s) 12 has struck a step while the user is trying to move the power-assisted rollator 10 forward, the control unit 16 controls the motors 20 such that the front wheels 12 are raised (to shift to the step mode). Then, after shifted to the step mode, in other words, before the attitude of the power-assisted rollator 10 becomes unstable (including immediately after becoming unstable, the same applies to the same hereinafter) after the motors 20 generate a driving force, the control unit 16 reduces the driving force generated by the drive unit (for example, the motors 20). Here, since the drive unit (for example, the motor(s) 20) continues to generate a driving force as a state before the attitude of the above-described power-assisted rollator 10 becomes unstable, it is possible to prevent the attitude of the power-assisted rollator 10 from becoming unstable and the instability from increasing. As a result, the front wheels 12 can easily ride over the step without user's performing an operation that is a heavy burden to the user, and it is possible to prevent that the attitude of the power-assisted rollator 10 becomes unstable or the instability increases at the time when the rollator runs onto the step.

Specifically, as the indications to know that the attitude of the power-assisted rollator 10 is about to become or actually becomes unstable, the embodiment uses the raise of the front wheels 12 by a predetermined value or more, idle rotation of at least one of the front wheels 12 or the rear wheels 13 (idle rotation of the rear wheels in this example), or the state where a user tries to cancel the increase of the driving force of the motor(s) 20 (cancel the step mode). In this way, it is possible to prevent that the attitude of the power-assisted rollator 10 becomes unstable and the instability is expanded. For example, when the driving force of the motor(s) 20 is decreased after detecting the raise of the front wheels 12 that ride over the step or detecting excessive raise of the front wheels 12, for example, it is possible to prevent the attitude of the power-assisted rollator 10 from becoming unstable and the instability from increasing by rapidly accelerating the front wheels 12 immediately after the raised front wheels 12 are grounded. When the driving force of the motor(s) 20 is reduced after detecting the idle rotation of at least one of the front wheels 12 or the rear wheels 13, it is possible to prevent that the attitude of the power-assisted rollator 10 becomes unstable or the instability increases due to idle rotation. Consequently it is possible to prevent that the driving force of the motors 20 is wastefully consumed. Similarly, when the driving force of the motor(s) 20 is reduced after detecting that the user tries to escape from the state (the step mode) where the driving force is generated by the motor(s) 20, it is possible to prevent the attitude of the power-assisted rollator 10 from becoming unstable or the instability from increasing due to the operation performed by the user who tries to cancel the state. Moreover it is possible to prevent that the driving force of the motor(s) 20 is wastefully consumed.

In this embodiment, after shifted to the step mode, the control unit 16 detects the raise of the front wheels 12 by detecting that the tilt angle of the power-assisted rollator 10 is equal to or larger than a predetermined angle. Thus, the raise of the front wheels 12 is determined based on the inclination angle of the power-assisted rollator 10 that directly indicates the raise of the front wheels 12 so that it is possible to detect the raised state accurately.

Alternatively, after shifted to the step mode, the control unit 16 may detect the raise of the front wheels 12 by detecting that the rear wheels 13 have rotated, and according to this configuration, the raise is determined based on information about the rotational state of the rear wheels 13 that is typically used by other controls. Therefore, related sensors can be shared and thereby it is possible to simplify the device configuration and internal system.

Further, this case, to detect the raise of the front wheels 12, the control unit 16 may detect that the angular velocity of the rear wheels 13 in the forward direction reaches to or exceeds the first predetermined angular velocity, or the angular acceleration of the rear wheels 13 in the forward direction reaches to or exceeds the first predetermined angular acceleration. In this case, it is possible to improve the detection accuracy to determine the raise of the front wheels 12 by comparing the angular velocity or angular acceleration of the rear wheels with the reference such as the first predetermined angular velocity or the first predetermined angular acceleration respectively. In particular, when the raise is detected based on the angular acceleration, it is possible to detect the raise earlier than in the case of the angular velocity, so that situations where ease of use is impaired by an increase in the driving force of the motors 20 can be avoided at an early stage.

Furthermore, in the embodiment, after shifted to the step mode, the control unit 16 detects the idle rotation of the rear wheels 13 by detecting that a difference of the angular acceleration between the left rear wheel 13 and the right rear wheel 13 reaches to or exceeds a predetermined value. Therefore the idle rotation of the rear wheels 13 can be detected quickly, and it is possible to avoid situations where usability is impaired by an increase in the driving force of the motors 20 at an early stage. It should be noted that the control unit 16 may detect the idle rotation of the rear wheels 13 by detecting that a difference of the angular velocity between the left rear wheel 13 and the right rear wheel 13 reaches to or exceeds a predetermined value.

Further, in the embodiment, after shifting to the step mode, the control unit 16 detects that a user tries to cancel the state (the step mode) where the driving force of the motor 20 is increased by detecting that the angular velocity of the rear wheels 13 in the backward direction reaches to or exceeds a predetermined angular velocity. In this case, based on information on the rotational state (rotation angle, angular velocity, angular acceleration, or the like.) of the rear wheels 13 which is typically used in other control, the control unit 16 determines whether the user pulls the power-assisted rollator 10 rearward and thereby the control unit 16 determines that the user tries to release the step mode. In this way, related sensors can be shared and thereby it is possible to simplify the device configuration and internal system. Further, by determining that the user tries to cancel the step mode by comparing the angular velocity of the rear wheels 13 with a reference such as a predetermined angular velocity, it is possible to improve the detection accuracy. It should be noted that the control unit 16 may detect that the user tries to cancel the step mode based on the angular acceleration of the rear wheels 13. Alternatively, the control unit 16 may detect that the user tries to cancel the step mode based on the angular velocity or angular acceleration of the front wheels 12.

In addition, the control unit 16 may detect that the user tries to cancel the state of increasing the driving force of the motor(s) 20 by detecting that the handles 14 are pulled in the backward direction based on the force applied to the handles 14. In this case, since it is determined that the user tries to cancel the step mode based on the force applied to the handles 14 which can directly indicates that the handle 14 is pulled rearward, this state can be detected with high accuracy. Here, the control unit 16 may determine that the handles 14 are pulled in the backward direction when the force in the backward direction detected by the grip sensors 24 reaches to or exceeds a predetermined value. In this case, the force applied to the handles 14 is compared with a reference such as a predetermined value to determine that the user tries to cancel the state where the driving force of the motor(s) 20 is increased, and therefore it is possible to improve the detection accuracy.

In the above description, the angular velocity and angular acceleration of the rear wheels 13 are used. Alternatively the number of rotations and speed of the rear wheels 13, the rotation angle of the rear wheels 13, the speed of the power-assisted rollator 10, or the acceleration of the power-assisted rollator 10 which is obtained by time-differentiating the speed may be used.

The process of the control unit 16 in the above-described fifth embodiment can also be applied to the first to fourth embodiments.

In the first embodiment, after the front wheels 12 are lifted, the control unit 16 gradually reduces the driving force in the forward direction of the rear wheels 13 at the first reduction rate when a predetermined condition is no longer satisfied. On the other hand, when a condition different from the above-described predetermined condition is satisfied, the control unit 16 decreases the driving force in the forward direction of the rear wheels 13 at the second reduction rate which is larger than the above-mentioned first reduction rate. The process described in the fifth embodiment may be combined with the process in the first embodiment as described above or may be replaced with a part of the process.

For example, after the front wheels 12 are raised, the control unit 16 may gradually decreases the driving force of the rear wheels 13 in the forward direction at the first reduction rate when a predetermined condition is not satisfied (when a predetermined condition is detected). On the other hand, after the driving force of the motor(s) 20 is generated, the control unit 16 may reduce the driving force generated by the motor(s) 20 when it detects that a user tries to cancel the state where the driving force of the motor(s) 20 is generated, that the raise of the front wheels 12 is equal to or more than a predetermined value, or that the idle rotation of the rear wheels 13 occurs. Here, the reduction of the driving force of the motor(s) 20 in the latter is performed in a manner different from the reduction of the driving force in the former (the reduction at the first reduction rate). In this case, the threshold value that is used for determining the shift to the reduction of the driving force at the first reduction rate is different from the threshold value that is used for determining that the user tries to cancel the state where the driving force of the motors 20 is generated, that the raise of the front wheels 12 is equal to or more than a predetermined value, or that the idle rotation of the rear wheels 13 occurs.

The embodiments and the variations of the present invention described above are mere examples and are not intended to limit the scope of the invention. The embodiments and the variations described above may have various other forms and are susceptible to omission, replacement, and modification of various elements thereof within the scope of the invention. The embodiments and the variations described above are included in the scope and the purport of the invention and are also included in the inventions recited in the claims and the equivalents thereof.

**Claims**

1. An electric vehicle comprising:

   a drive unit (20) generating a driving force for raising front wheels (12) of an electric vehicle (10);

an attitude detection unit (22, 23, 24, 25) for detecting an attitude of the electric vehicle; and

a control unit (16), after causing the drive unit (20) to generate a driving force, reducing the driving force of the driving unit (20) when it is determined that the attitude of the electric vehicle (10) is about to become unstable or has become unstable based on an attitude of the electric vehicle (10) detected by the attitude detection unit (22, 23, 24, 25).

2. The electric vehicle according to claim 1, wherein when an inclination angle of the electric vehicle (10) reaches to or exceeds a predetermined angle, it is determined that the attitude is about to become unstable or becomes unstable.

3. The electric vehicle according to claim 1, wherein when at least any one of the number of rotations, an angular velocity, an angular acceleration, and a speed of the electric vehicle (10) or a rear wheel (13) of the electric vehicle (10) in a direction where the electric vehicle (10) moves forward reaches to or exceeds a predetermined value, it is determined that the attitude is about to become unstable or becomes unstable.

4. The electric vehicle according to claim 1, wherein when a current or voltage for generating the driving force is equal to or below a predetermined value, or when a change amount per unit time of the current or the voltage is equal to or more than a predetermined value, it is determined that the attitude is about to become unstable or becomes unstable.

5. The electric vehicle according to claim 1, wherein
when a torque for generating the driving force is equal to or blow a predetermined value or when the amount of change in the torque is equal to or more than a predetermined value, it is determined that the attitude is about to become unstable or becomes unstable.

6. The electric vehicle according to claim 1, wherein when a difference of the angular acceleration between the left front wheel (12) and the right front wheel (12) reaches to or exceeds a predetermined value or when a difference of the angular acceleration between a left rear wheel (13) and a right rear wheel (13) of the electric vehicle (10), it is determined that the attitude is about to become unstable or becomes unstable.

7. The electric vehicle according to claim 1, wherein when a speed or acceleration in a backward direction of the electric vehicle (10), the front wheel (12), or a rear wheel (13) of the electric vehicle (10) reaches to or exceeds a predetermined value, it is determined that the attitude is about to become unstable or becomes unstable.

8. The electric vehicle according to claim 1, wherein when a force pushing the electric vehicle 10 backward is applied to handles which a user of the electric vehicle 10 touches, it is determined that the attitude is about to become unstable or becomes unstable.

9. The electric vehicle according to claim 1, wherein the control unit (16) increases or decreases a reduction rate of the driving force of the drive unit (20) in accordance with at least one of the number of rotations, an angular velocity, an angular acceleration, and a speed of the electric vehicle (10) or a rear wheel (13) of the electric vehicle (10) at the time when it is determined that the front wheel (12) is raised by a predetermined value or more based on an attitude of the electric vehicle (10) detected by the attitude detection unit (22, 23, 24, 25) or when it is determined that an inclination angle of the electric vehicle (10) reaches to or exceeds a predetermined angle.

10. The electric vehicle according to claim 9, wherein the control unit (16) increases the reduction rate as the speed or acceleration of the electric vehicle (10) or the number of rotations, the angular velocity, or the angular acceleration of the rear wheel (13) is larger, or the control unit (16) reduces the driving force to zero based on at least one of the speed or acceleration of the electric vehicle (10) or at least one of the number of rotations, the angular velocity, or the angular acceleration of the rear wheel (13).

11. The electric vehicle according to claim 1, wherein the control unit (16) increases a reduction rate of the driving force or reduces the driving force to zero according to an inclination angle of the electric vehicle (10) when it is determined that the front wheel (12) is raised by a predetermined value or more based on the attitude of the electric vehicle (10) detected by the attitude detection unit (22, 23, 24, 25).

12. The electric vehicle according to claim 1, wherein it is determined that the front wheel (12) is raised by a predetermined value or more, that at least one of the front wheel (12) and a rear wheel (13) of the electric vehicle (10) idly rotates, or that the attitude is about to become unstable or becomes unstable while a user tries to cancel a state where the driving force is generated.

**13.** The electric vehicle according to claim 12, wherein the control unit (16) uses a different reduction rate of the driving force between when it is detected that the front wheel (12) is raised by a predetermined value or more based on the attitude of the electric vehicle (10) detected by the attitude detection unit (22, 23, 24, 25), when it is detected that at least one of the front wheel (12) or the rear wheel (13) idly rotates, and when it is detected that the user tries to cancel the state where the driving force is generated.

**14.** A method of controlling an electric vehicle (10), comprising:

generating a driving force for raising a front wheel (12) of the electric vehicle (10);
determining an attitude of the electric vehicle (10) after generating the driving force; and
reducing the driving force when it is determined that an attitude of the electric vehicle (10) is about to become unstable or becomes unstable.

**15.** A computer program for controlling an electric vehicle that generates a driving force to raise a front wheel, **characterized in that** the computer program causes a computer to execute the control method according to claim 14.

# Fig. 1

Fig. 2

Fig. 3

Fig. 4

Fig. 5

Fig. 6

Fig. 7

# Fig. 8

Fig. 9

Fig. 10

Fig. 11

Fig. 12

**Normal Traveling State**

Fig. 13

**Front Wheel Locked State**

Fig. 14

Fig. 15a

Fig. 15b

Fig. 16a

Fig. 16 b

# Fig. 17

START

Increase drive force. — S181

S182

Front wheels are raised? — YES

NO

S183

Idle rotation occured? — YES

NO

S184

NO — User's cancel operation?

YES

Reduce driving force. — S185

END

# Fig. 18

Europäisches
Patentamt

European
Patent Office

Office européen
des brevets

**EUROPEAN SEARCH REPORT**

Application Number

EP 18 18 8430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2016 201792 A1 (BOSCH GMBH ROBERT [DE]) 10 August 2017 (2017-08-10) * paragraphs [0008], [0011], [0035], [0036], [0044]; figures * ----- | 1-15 | INV. A61H3/04 |
| X | EP 3 000 456 A1 (NABTESCO CORP [JP]) 30 March 2016 (2016-03-30) * paragraphs [0106] - [0112]; claim 5; figures * ----- | 1-15 | |
| X | WO 2016/074791 A2 (BOW2GO GMBH [DE]) 19 May 2016 (2016-05-19) * page 8, lines 14-18 * * page 16, line 29 - page 17, line 14; figures * ----- | 1-15 | |
| | | | **TECHNICAL FIELDS SEARCHED (IPC)** A61H |

The present search report has been drawn up for all claims

| Place of search | Date of completion of the search | Examiner |
|---|---|---|
| Munich | 7 December 2018 | Fischer, Elmar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 18 8430

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2018

| Patent document cited in search report | Publication date | Patent family member(s) | Publication date |
|---|---|---|---|
| DE 102016201792 A1 | 10-08-2017 | NONE | |
| EP 3000456 A1 | 30-03-2016 | EP 3000456 A1<br>JP 6199380 B2<br>JP WO2014188726 A1<br>WO 2014188726 A1 | 30-03-2016<br>20-09-2017<br>23-02-2017<br>27-11-2014 |
| WO 2016074791 A2 | 19-05-2016 | CN 107000774 A<br>DE 102015000270 A1<br>EP 3217943 A2<br>JP 2018500065 A<br>US 2017326019 A1<br>WO 2016074791 A2 | 01-08-2017<br>12-05-2016<br>20-09-2017<br>11-01-2018<br>16-11-2017<br>19-05-2016 |

EPO FORM P0459

For more details about this annex : see Official Journal of the European Patent Office, No. 12/82

**EP 3 443 945 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009183407 A